# EUROPÄISCHE PATENTSCHRIFT

(11) **EP 4 045 607 B1**
(45) Veröffentlichungstag und Bekanntmachung des Hinweises auf die Patenterteilung: **10.06.2026**
(21) Anmeldenummer: 20792558.7
(22) Anmeldetag: 07.10.2020
(51) Int. Cl.: C09J 5/00, C09J 7/10, C09J 4/06, C09J 151/08, C08F 283/00

(54) **REAKTIVER KLEBSTOFFFILM MIT GUTER FEUCHTWÄRMEBESTÄNDIGKEIT, INSBESONDERE ZUM VERKLEBEN VON POLYAMID**
REACTIVE ADHESIVE FILM WITH GOOD HEAT-AND-HUMIDITY RESISTANCE, IN PARTICULAR FOR BONDING POLYAMIDE
FILM ADHÉSIF RÉACTIF PRÉSENTANT UNE BONNE RÉSISTANCE À LA CHALEUR ET À L'HUMIDITÉ, EN PARTICULIER POUR LE COLLAGE DE POLYAMIDE

(30) Priorität: 14.10.2019 DE 102019215766
(43) Veröffentlichungstag der Anmeldung: 24.08.2022
(73) Patentinhaber: tesa SE, 22848 Norderstedt (DE)
(72) Erfinder: SCHÜMANN, Uwe, 25421 Pinneberg (DE); CROUZY, Séverine, 01120 La Boisse (FR); ZEYSING, Björn, 22393 Hamurg (DE); MOEHRKE, Claudia, 22605 Hamburg (DE); LUNDING, Marta, 22844 Norderstedt (DE)
(74) Vertreter: tesa SE
(86) Internationale Anmeldenummer: PCT/EP2020/078027
(87) Internationale Veröffentlichungsnummer: WO 2021/073959

(56) Entgegenhaltungen:
- WO-A1-2014/202402
- WO-A1-2017/174303
- WO-A1-2017/190949
- WO-A1-2020/069884

## Beschreibung

### Technisches Gebiet der Erfindung

Die vorliegende Erfindung betrifft ein reaktives Klebstofffilm-System, umfassend zwei reaktive Klebstofffilme auf Basis von Epoxid-funktionalisierten (Meth)acrylsäureester- und/ oder Vinyl-Monomeren zur Verklebung von diversen Materialien, wie z.B. Kunststoff, insbesondere Polyamid und Polycarbonat sowie Metall, insbesondere Aluminium. Die reaktiven Klebstofffilme umfassen (a) eine polymere Filmbildner-Matrix und (b) mindestens ein Epoxidfunktionalisiertes, reaktives (Meth)acrylsäureester- oder Vinyl-Monomer und ein Reagens, ausgewählt aus einem Initiator oder einem Aktivator, wobei der erste reaktive Klebstofffilm einen Radikalinitiator und der zweite reaktive Klebstofffilm einen Aktivator enthält. Außerdem werden ein Kit zur Bereitstellung des erfindungsgemäßen, reaktiven Klebstofffilm-Systems, umfassend einen ersten und einen zweiten reaktiven Klebstofffilm, wie oben beschrieben zur Verfügung gestellt.

### Allgemeiner Stand der Technik

2-Komponentenklebesysteme auf Basis von Acrylmonomeren sind allgemein seit Jahren bekannt und in der Fachliteratur eingehend beschrieben. In diesen radikalisch polymerisierenden Systemen wird ein aus zwei Komponenten bestehendes Klebstoff-System auf die zu verklebenden Teile aufgetragen, wobei üblicherweise zwei flüssige Komponenten zum Einsatz kommen. Beispielsweise bestehen die eine Komponente aus den zu polymerisierenden Monomeren und einem Aktivator und die andere Komponente aus einer radikalbildenden Substanz (auch Härter oder Initiator genannt) und den zu polymerisierenden Monomeren. Nach Durchmischen oder zumindest Kontaktieren der beiden Komponenten entsteht durch chemische Reaktion des Aktivators mit der radikalbildenden Substanz mindestens ein Radikal und die Polymerisationsreaktion der zu polymerisierenden Monomere beginnt. Die Radikalkettenpolymerisation des Monomers findet anschließend bis zu einem Kettenabbruch statt und die Klebemasse härtet somit aus, wodurch eine dauerhafte Verklebung der zu verklebenden Teile erreicht wird.

Nachteil derartiger flüssiger 2-Komponenten-Polymerisations-Klebesysteme ist, dass ihre Anwendung oft unsauber erfolgt, da die beiden Komponenten meist flüssig bis pastös auf die zu verklebenden Teile aufgetragen werden müssen. Dies ist sowohl bei sehr kleinen und schmalen als auch bei großflächigen Verklebungen und/oder bei solchen Anwendungen problematisch, bei denen die Oberflächen uneben, z.B. geneigt, sind.

In Form von haftklebrigen Filmen (Klebebändern) sind 2-Komponentenklebesysteme auf Basis von Acrylmonomeren ebenfalls bekannt. Sie werden beispielsweise in EP 0 300 847 A1, EP 3 010 989 A1, EP 3 063 243 A1, EP 3 328 951 A1, WO 2017/102282 A1 sowie in WO 2018/104053 A1 beschrieben. Ein wesentlicher Nachteil dieser Klebesysteme ist, dass ihre Feuchtwärmebeständigkeit nicht optimal ist. WO 2018/104053 A1 bietet für dieses Problem zwar einen Lösungsansatz, jedoch sind die Ergebnisse auf schwer zu verklebenden Substraten wie insbesondere Polyamid nicht zufriedenstellend.

Einkomponentige reaktive Klebmassen und entsprechende Klebstofffilme sind dem Fachmann ebenso bekannt. So offenbart WO 2017/190949 A1 eine thermisch härtbare Klebemasse, die das unerwünschte Ausquetschen ("Oozing") während des Heißverpressens reduzieren soll. Die Klebemasse besteht im Wesentlichen aus einem epoxidfunktionalisierten (Co)Polymer, einem thermisch aktivierbaren Härter und einem Matrixpolymer. Die WO 2017/174303 A1 beschreibt ein strahlenaktivierbares Haftklebeband, das nach der Aktivierung eine Dunkelreaktion bei Raumtemperatur zeigt und dabei eine lange Offenzeit aufweisen soll. Die Zusammensetzung besteht im Wesentlichen aus einem Polyurethan-Polymer als Filmbildner, einer Epoxid-Komponente und einem Photoinitiator.

### Aufgabe der vorliegenden Erfindung

Der vorliegenden Erfindung liegt insofern die Aufgabe zu Grunde, einen hinsichtlich der Feuchtwärmebeständigkeit verbesserten, reaktiven Klebstofffilm bereitzustellen, der mit einem zweiten reaktiven Klebstofffilm gehärtet werden kann und mit dem hohe Verklebungsfestigkeiten erzielt werden können. Insbesondere soll gegenüber dem Stand der Technik die Feuchtwärmebeständigkeit von PolyamidVerklebungen verbessert werden.

Die Aufgabe soll durch ein reaktives Klebstofffilm-System gelöst werden, bestehend aus zwei reaktiven Klebstofffilmen, die durch miteinander-in-Kontakt-bringen gehärtet werden können.

Der reaktive Klebstofffilm bzw. das reaktive Klebstofffilm-System sollen einfach zu handhaben sein und die Filme sollen eine Haftklebrigkeit aufweisen, so dass es zu keinem Verrutschen während der Applikation auf den zu verklebenden Substraten kommt und eine exaktere Verklebung als bei den flüssigen 2-Komponenten-Polymerisations-klebesystemen, die im Stand der Technik bekannt sind, ermöglicht wird.

### Lösung der Aufgabe

Gelöst wird die Aufgabe durch ein reaktives Klebstofffilm-System, umfassend zwei reaktive Klebstofffilme gemäß Hauptanspruch, wobei die reaktiven Klebstofffilme (a) eine polymere Filmbildner-Matrix, (b) mindestens ein reaktives Monomer und (c) mindestens ein Reagens, ausgewählt aus einem Initiator oder einem Aktivator, umfasst, dadurch gekennzeichnet, dass das mindestens eine reaktive Monomer einen Epoxid-funktionalisierten Acrylsäureester oder Epoxid-funktionalisierten Methacrylsäureester oder eine Epoxid-funktionalisierte Vinylverbindung umfasst, wobei der erste reaktive Klebstofffilm einen Radikalinitiator und der zweite reaktive Klebstofffilm einen Aktivator enthält.

Gegenstand der Unteransprüche sind dabei vorteilhafte Weiterbildungen des reaktiven Klebstofffilm-Systems sowie dessen Verwendungsmöglichkeiten.

### Detaillierte Beschreibung der Erfindung

Die oben beschriebene Aufgabe wird mit mindestens einem reaktiven Klebstofffilm-System gelöst, umfassend zwei reaktive Klebstofffilme A und B bereitgestellt, das dadurch gekennzeichnet ist, dass der erste erfindungsgemäße reaktive Klebstofffilm A einen Radikalinitiator enthält und der zweite erfindungsgemäße reaktive Klebstofffilm B einen Aktivator enthält. Die reaktiven Klebstofffilme umfassen (a) eine polymere Filmbildner-Matrix, (b) mindestens ein reaktives Monomer und (c) mindestens ein Reagens, ausgewählt aus einem Radikalinitiator, oder einem Aktivator, dadurch gekennzeichnet, dass das mindestens eine reaktive Monomer einen Epoxid-funktionalisierten Acrylsäureester oder Epoxid-funktionalisierten Methacrylsäureester oder eine Epoxid-funktionalisierte Vinylverbindung umfasst.

In einer Ausführungsform wird ein reaktives Klebstofffilm-System, umfassend zwei reaktive Klebstofffilme A und B bereitgestellt, das dadurch gekennzeichnet ist, dass der erste erfindungsgemäße reaktive Klebstofffilm A einen Radikalinitiator, enthält und der zweite erfindungsgemäße reaktive Klebstofffilm B einen Aktivator enthält.

Es wird ein Verfahren zur Herstellung der reaktiven Klebstofffilmes offenbart, wobei das Verfahren die folgenden Schritte umfasst:
1. Auflösen und/oder Feinverteilen der Inhaltsstoffe in einem oder mehreren Lösemittel(n) und/oder Wasser,
2. Mischen der aufgelösten oder feinverteilten Inhaltsstoffe,
3. Beschichten eines Trennliners oder -papiers, eines Trägermaterials oder eines in Filmform vorliegenden Haftklebstoffs mit der Mischung aufgelöster oder verteilter Inhaltsstoffe nach Schritt 2,
4. Verdunsten des Lösemittels und/oder Wassers und
5. Gegebenenfalls Aufwickeln des reaktiven Klebstofffilms zu einer Rolle.
wobei die Inhaltsstoffe (a) eine polymere Filmbildner-Matrix, (b) mindestens ein Epoxidfunktionalisiertes, reaktives (Meth)acrylsäureester- oder Vinyl-Monomer und (c) ein Reagens, ausgewählt aus einem Initiator, insbesondere Radikalinitiator, oder einem Aktivator, umfassen.

Schritte 1. und 2. können auch in einem Schritt erfolgen, die Inhaltsstoffe also gleichzeitig aufgelöst und/oder feinverteilt werden.

In einer weiteren erfindungsgemäßen Ausführungsform wird ein Kit zur Bereitstellung eines Zweikomponenten-Klebstofffilm-Systems, umfassend (i) mindestens einen ersten erfindungsgemäßen reaktiven Klebstofffilm, der einen Radikalinitiator enthält, und (ii) mindestens einen zweiten erfindungsgemäßen reaktiven Klebstofffilm, der einen Aktivator enthält, offenbart.

In einer weiteren erfindungsgemäßen Ausführungsform wird ein Verbundkörper offenbart, der durch das erfindungsgemäße, reaktive Klebstofffilm-System oder durch das erfindungsgemäße Kit verbunden ist.

Nachfolgend werden die Komponenten der erfindungsgemäßen Klebstofffilme bzw. des erfindungsgemäßen Klebstofffilm-Systems im Detail beschrieben.

### Polymere Filmbildner-Matrix

Die erfindungsgemäßen reaktiven Klebstofffilme bestehen grundsätzlich aus einer Matrix, die nachfolgend polymere Filmbildner-Matrix genannt wird, in der die reaktiven, zu polymerisierenden Monomere enthalten sind. Aufgabe dieser Matrix ist es, ein inertes Grundgerüst für die reaktiven Monomere zu bilden, so dass diese nicht flüssig vorliegen und damit die genannten Probleme auslösen können, sondern in einem Film oder einer Folie eingelagert sind. Auf diese Art und Weise wird eine einfachere Handhabung gewährleistet.

Inert bedeutet in diesem Zusammenhang, dass die reaktiven Monomere unter geeignet gewählten Bedingungen (z. B. bei ausreichend geringen Temperaturen) im Wesentlichen nicht mit der polymeren Filmbildner-Matrix reagieren.

Geeignete Filmbildner-Matrices zur Verwendung in der vorliegenden Erfindung sind thermoplastische Polymere, wie z.B. Polyurethane, Polyester bzw. Copolyester, Polyamide bzw. Copolyamide, Polyacrylsäureester, Acrylsäureester-Copolymere, Polymethacrylsäureester, Methacrylsäureester-Copolymer. Chemisch oder physikalisch vernetzte Stoffe der zuvor genannten Verbindungen sind ebenfalls denkbar. Darüber hinaus können auch Blends aus verschiedenen thermoplastischen Polymeren eingesetzt werden.

Weiterhin sind auch Elastomere, thermoplastische Elastomere und Duromere allein oder im Gemisch als polymere Filmbildner-Matrix denkbar.

Bevorzugt sind thermoplastische Polyurethane, insbesondere semikristalline. Besonders bevorzugt sind thermoplastische Polymere mit einer kristallinen Schmelztemperatur von kleiner als 100°C und Erweichungstemperaturen von ebenfalls kleiner als 100°C. In diesem Zusammenhang steht der Begriff Erweichungspunkt für die Temperatur, ab der das thermoplastische Granulat mit sich selbst verklebt. Wenn es sich bei dem Bestandteil der polymeren Filmbildner-Matrix um ein semikristallines thermoplastisches Polymer handelt, dann weist es neben seiner Erweichungstemperatur (die mit dem Schmelzen der Kristallite zusammenhängt) sehr bevorzugt eine Glasübergangstemperatur von höchstens 25 °C, bevorzugt höchstens 0 °C, auf.

In einer bevorzugten, erfindungsgemäßen Ausführungsform wird ein thermoplastisches Polyurethan eingesetzt. Vorzugsweise besitzt das thermoplastische Polyurethan eine Erweichungstemperatur von kleiner als 100°C, insbesondere kleiner als 80°C.

In einer besonders bevorzugten, erfindungsgemäßen Ausführungsform wird Desmomelt^{®} 530 als polymere Filmbildner-Matrix eingesetzt, das im Handel bei der Covestro AG, 51373 Leverkusen, Deutschland, erhältlich ist. Desmomelt^{®} 530 ist ein hydroxyl-terminiertes, weitgehend lineares, thermoplastisches, stark kristallisierendes Polyurethan-Elastomer.

Die Menge der polymeren Filmbildner-Matrix liegt erfindungsgemäß im Bereich von etwa 10 bis 90 Gew.%, bevorzugt etwa 20 bis 50 Gew.%, bezogen auf die Gesamtmischung der Bestandteile eines der erfindungsgemäßen reaktiven Klebstofffilme. Stärker bevorzugt werden 25 bis 45 Gew.%, am stärksten bevorzugt etwa 30 bis 40 Gew.%, der polymeren Filmbildner-Matrix, bezogen auf die Gesamtmischung der Bestandteile eines der erfindungsgemäßen reaktiven Klebstofffilme, eingesetzt. Die Gesamtmischung der Bestandteile eines der erfindungsgemäßen reaktiven Klebstofffilme steht hier für die gesamte Menge der eingesetzten polymeren Filmbildner-Matrix (a), der reaktiven Monomere (b), des Reagens (c) sowie weiterer optional vorliegender Komponenten, die als Summe (in Gew.%) erhalten wird.

### Reaktives Monomer

Wie hierin verwendet, soll das reaktive Monomer für ein Monomer stehen, das insbesondere zu einer Radikalkettenpolymerisation in der Lage ist.

Erfindungsgemäß ist das reaktive Monomer ein Epoxid-funktionalisierter Acrylsäureester oder ein Epoxid-funktionalisierter Methacrylsäureester oder eine Epoxid-funktionalisierte Vinylverbindung. Epoxid-funktionalisiert heißt, dass das Monomer eine oder mehrere Epoxidgruppen, auch Oxiran-Ringe genannt, enthält, dass also eine oder mehrere Epoxidgruppen chemisch an das Monomer-Molekül gebunden sind.

In einer bevorzugten Ausführungsform ist das reaktive Monomer ein mit einer oder mehreren cycloaliphatischen Epoxid-Gruppen funktionalisierter Acrylsäureester oder ein mit einer oder mehreren cycloaliphatischen Epoxid-Gruppen funktionalisierter Methacrylsäureester oder eine mit einer oder mehreren cycloaliphatischen Epoxid-Gruppen funktionalisierte Vinylverbindung. Unter einer cycloaliphatischen Epoxidgruppe wird eine Epoxidgruppe verstanden, die an einen aliphatischen Ring in der Weise gebunden ist, dass die beiden Kohlenstoffatome des Epoxidrings gleichzeitig Teil des aliphatischen Rings sind.

In einer besonders bevorzugten Ausführungsform ist das reaktive Monomer 3,4-Epoxycyclohexylmethylacrylat (CAS-Nr.: 64630-63-3) oder 3,4-Epoxycyclohexylmethylmethacrylat (CAS-Nr.: 82428-30-6) oder 1,2-Epoxy-4-vinylcyclohexan (CAS-Nr.: 106-86-5). Am bevorzugtesten ist 3,4-Epoxycyclohexylmethylmethacrylat (CAS-Nr.: 82428-30-6), erhältlich unter dem Handelsnamen TTA15 von der Firma Jiangsu Tetrachem Co., Ltd.

Unter dem Handelsnamen TTA16 ist 3,4-Epoxycyclohexylmethylacrylat, und unter dem Handelsnamen TTA11 ist 1,2-Epoxy-4-vinylcyclohexan von der gleichen Firma erhältlich.

Neben den erfindungsgemäß ausgewählten reaktiven Monomeren können die erfindungsgemäßen reaktiven Klebstofffilme weitere reaktive Monomere enthalten. Dies können beispielsweise weitere (Meth)acrylmonomere sein oder Vinylverbindungen, insbesondere stickstoffhaltige Vinylverbindungen und/oder andere monomere, oligomere oder polymere Verbindungen mit Kohlenstoff-Kohlenstoff-Doppelbindung(en).

Beispiele für weitere reaktive Monomere sind:
4-Acryloylmorpholin, 4-Methacryloylmorpholin, 2-Hydroxy-3-phenoxy-propylacrylat (CAS-Nr.: 16969-10-1), 2-Hydroxy-3-phenoxy-propylmethacrylat, (5-Ethyl-1,3-dioxan-5-yl)methylacrylat, Cyclohexylmethacrylat, 3,3,5-Trimethylcyclohexylmethacrylat, 4-(1,1-dimethylethyl)cyclohexylmethacrylat, Acrylsäure, Methylacrylat, Ethylacrylat, Propylacrylat, Butylacrylat, Pentylacrylat, Hexylacrylat, Methacrylsäure, Methylmethacrylat, Ethylmethacrylat, Propylmethacrylat, Butylmethacrylat, Pentylmethacrylat, Hexylmethacrylat, Phenylacrylat, Benzylacrylat, methylsubstituierte Phenylacrylate, methylsubstituierte Benzylacrylate, Phenylmethacrylat, Benzylmethacrylat, methylsubstituierte Phenylmethacrylate, methylsubstituierte Benzylmethacrylate, Hydroxyethylacrylat, Hydroxypropylacrylat, Hydroxybutylacrylat, Methoxyethylacrylat, Methoxypropylacrylat, Methoxybutylacrylat, Ethoxyethylacrylat, Ethoxypropylacrylat, Ethoxybutylacrylat, Phenoxyethylacrylat, Hydroxyethylmethacrylat, Hydroxypropylmethacrylat, Hydroxybutylmethacrylat, Methoxyethylmethacrylat, Methoxypropylmethacrylat, Methoxybutylmethacrylat, Ethoxyethylmethacrylat, Ethoxypropylmethacrylat, Ethoxybutylmethacrylat, Phenoxyethylmethacrylat, jeweils in allen isomeren Formen, Tetrahydrofurfurylacrylat, Tetrahydrofurfurylmethacrylat,
ein Poly(ethylenglykol)phenylethermethacrylat der allgemeinen Formel (I): 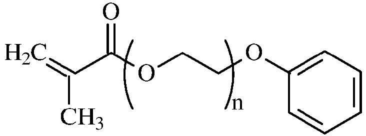
wobei n= 2 bis 10 ist,
ein an der Phenylgruppe einfach oder mehrfach alkylsubstituiertes Poly(ethylenglykol)phenylethermethacrylat der allgemeinen Formel (II): 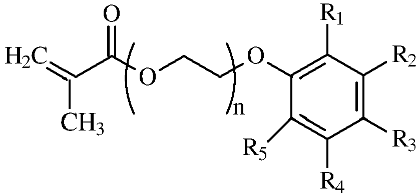
wobei n= 2 bis 10 ist; und R₁, R₂, R₃, R₄, R₅ unabhängig voneinander H oder C₁-C₁₄- Alkyl darstellen,
ein Poly(ethylenglykol)phenyletheracrylat der allgemeinen Formel (III): 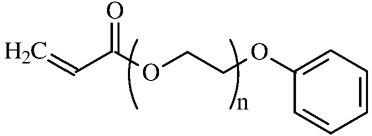 wobei n= 2 bis 10 ist,
ein an der Phenylgruppe einfach oder mehrfach alkylsubstituiertes Poly(ethylenglykol)phenyletheracrylat der allgemeinen Formel (IV): 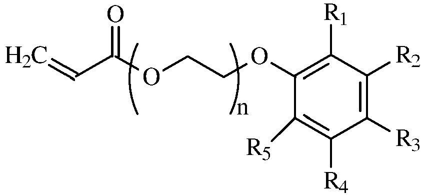
wobei n= 2 bis 10 ist; und R₁, R₂, R₃, R₄, R₅ unabhängig voneinander H oder C₁-C₁₄- Alkyl darstellen.

Der Gesamtanteil des erfindungsgemäßen Epoxid-funktionalisierten Acrylsäureesters oder des Epoxid-funktionalisierten Methacrylsäureesters oder der Epoxid-funktionalisierten Vinylverbindung an allen in einem der erfindungsgemäßen reaktiven Klebstofffilme enthaltenen reaktiven Monomere beträgt mindestens 1,0 Gewichtsprozent, bevorzugt mindestens 2,0 Gewichtsprozent, besonders bevorzugt mindestens 5,0 Gewichtsprozent.

Die Menge des reaktiven Monomers/der reaktiven Monomere liegt erfindungsgemäß im Bereich von etwa 10-90 Gew.%, bevorzugt etwa 40-70 Gew.%, bezogen auf die Gesamtmischung der Bestandteile eines der erfindungsgemäßen reaktiven Klebstofffilme. Am stärksten bevorzugt werden etwa 45-65 Gew.% des reaktiven Monomers/ der reaktiven Monomere, bezogen auf die Gesamtmischung der Bestandteile eines der reaktiven Klebstofffilme, eingesetzt. Die Gesamtmischung der Bestandteile eines der erfindungsgemäßen reaktiven Klebstofffilme steht hier für die gesamte Menge der eingesetzten polymeren Filmbildner-Matrix (a), der reaktiven Monomere (b), des Reagens (c) sowie weiterer optional vorliegender Komponenten, die als Summe (in Gew.%) erhalten wird.

### Initiator, insbesondere Radikalinitiator

Wie hierin verwendet, steht der Begriff Initiator, insbesondere Radikalinitiator bzw. radikalbildende Substanz (oder auch Härter), für eine Verbindung, die eine Polymerisationsreaktion oder Vernetzung des Klebstoffs einleiten kann. Der Initiator, insbesondere Radikalinitiator, nimmt allerdings zu einem sehr geringen Anteil am Reaktionsgeschehen teil und bildet folglich keinen die Eigenschaften der Verklebung bestimmenden Polymeranteil.

In der vorliegenden Erfindung wird dem ersten reaktiven Klebstofffilm ein Initiator, insbesondere Radikalinitiator, zugesetzt.

Bevorzugt werden Radikalinitiatoren. Es können alle im Stand der Technik bekannten Radikalinitiatoren eingesetzt werden. Bevorzugte Radikalinitiatoren sind Peroxide, Hydroperoxide und Azoverbindungen.

In einer besonders bevorzugten, erfindungsgemäßen Ausführungsform ist der Radikalinitiator ein organisches Peroxid. Besonders bevorzugt sind Hydroperoxide, insbesondere Diisopropylbenzol-hydroperoxid (CAS-Nr. 26762-93-6). Diisopropylbenzol-hydroperoxid wird bevorzugt in Form einer 50 gew.%igen Lösung von Diisopropylhydroperoxid in Diisopropylbenzol, erhältlich unter dem Handelsnamen Peroxan^{®} IHP-50 von der Firma Pergan GmbH in 46395 Bocholt, Deutschland, eingesetzt. α,α- Dimethylbenzylhydroperoxid, das auch als Cumolhydroperoxid (CAS-Nr. 80-15-9) bekannt ist, kann ebenfalls verwendet werden. Weiterhin können zum Beispiel auch p-Menthanhydroperoxid (CAS-Nr. 26762-92-5), tert.-Amyl-hydroperoxid (CAS-Nr. 3425-61-4) oder 1,1,3,3-Tetramethylbutyl-hydroperoxid (CAS-Nr. 5809-08-5) verwendet werden.

Die Menge des Radikalinitiators liegt erfindungsgemäß im Bereich von etwa 1 bis 10 Gew.%, bevorzugt etwa 2 bis 8 Gew.%, bezogen auf die Gesamtmischung der Bestandteile des ersten erfindungsgemäßen reaktiven Klebstofffilms. Am stärksten bevorzugt werden etwa 3 bis 6 Gew.% Radikalinitiator, bezogen auf die Gesamtmischung der Bestandteile des ersten erfindungsgemäßen reaktiven Klebstofffilms, eingesetzt. Die Gesamtmischung der Bestandteile des ersten erfindungsgemäßen reaktiven Klebstofffilms steht hier für die gesamte Menge der eingesetzten polymeren Filmbildner-Matrix (a), der reaktiven Monomere (b), des Reagens (c) sowie weiterer optional vorliegender Komponenten, die als Summe (in Gew.%) erhalten wird.

### Aktivator

Wie hier verwendet, steht der Begriff Aktivator für eine Verbindung, die bereits bei sehr geringen Konzentrationen den Ablauf der Polymerisation erst ermöglicht oder beschleunigt. Aktivatoren können auch Beschleuniger oder Akzeleratoren genannt werden.

In der vorliegenden Erfindung wird dem zweiten reaktiven Klebstofffilm ein Aktivator zugesetzt.

Geeignete Aktivatoren zur Verwendung in der vorliegenden Erfindung, wenn ein radikalisch polymerisierbares System aktiviert werden soll, sind beispielsweise ausgewählt aus der Gruppe, bestehend aus einem Dihydropyridin-Derivat oder einem Übergangsmetallkomplex, insbesondere einem Übergangsmetall-Phthalocyanin-Komplex.

In einer erfindungsgemäßen Ausführungsform ist der Aktivator 3,5-Diethyl-1,2-dihydro-1-phenyl-2-propylpyridin (auch PDHP genannt, CAS-Nr. 34562-31-7).

In einer bevorzugten erfindungsgemäßen Ausführungsform wird eine Komplexverbindung mit einem Eisen-, Mangan-, oder Kobalt-Kation als Zentralatom und einem Phthaloycyanin-Anion als Liganden eingesetzt. Das Eisen-, Mangan-, oder Kobalt-Kation ist in der Komplexverbindung zweifach positiv geladen, während das Phthaloycyanin-Anion zweifach negativ geladen ist. Das Eisen-, Mangan-, oder Kobalt-Kation ersetzt in der Komplexverbindung jeweils zwei Wasserstoff-Atome, die der Ligand vor der Umsetzung zur Komplexverbindung an den Stickstoff-Atomen getragen hat.

Die Phthalocyanin-Liganden können gegebenenfalls Substituenten anstelle der an die Kohlenstoff-Atome gebundenen H-Atome tragen. In diesem Fall spricht man von Derivaten dieser Verbindungen. Geeignete Substituenten sind ausgewählt aus der Gruppe, bestehend aus Fluor, Chlor, Brom, lod, Methyl, Ethyl, Propyl, Isopropyl, Butyl, tert.-Butyl, - OH, -NH₂, -NO₂.

Ein besonders geeigneter Aktivator umfasst Eisen(II)-phthalocyanin (CAS-Nr. 132-16-1), Mangan(II)-phthalocyanin (CAS-Nr. 14325-24-7), oder Kobalt(II)-phthalocyanin (CAS-Nr. 3317-67-7). Am bevorzugtesten wird Eisen(II)-phthalocyanin (CAS-Nr. 132-16-1), erhältlich von der Firma Chemos GmbH in 93128 Regenstauf, Deutschland, als Aktivator eingesetzt.

Die Menge des Aktivators liegt erfindungsgemäß im Bereich von größer 0 bis etwa 10 Gew.%, bevorzugt etwa 0,1-5,0 Gew.%, bezogen auf die Gesamtmischung der Bestandteile des zweiten erfindungsgemäßen reaktiven Klebstofffilms. Am stärksten bevorzugt werden etwa 0,2-3,0 Gew.%, noch bevorzugter 0,5-2,0 Gew.% Aktivator, bezogen auf die Gesamtmischung der Bestandteile des zweiten erfindungsgemäßen reaktiven Klebstofffilms eingesetzt.

Die Gesamtmischung der Bestandteile des zweiten erfindungsgemäßen reaktiven Klebstofffilms steht hier für die gesamte Menge der eingesetzten polymeren Filmbildner-Matrix (a), der reaktiven Monomere (b), des Reagens (c) sowie weiterer optional vorliegender Komponenten, die als Summe (in Gew.%) erhalten wird.

### Vernetzer

Wie hier verwendet, steht der Begriff Vernetzer für chemische Verbindungen, die imstande sind, lineare Molekülketten mit reaktionsfähigen, funktionellen Gruppen zu versehen, damit sich aus den zweidimensionalen Strukturen über Ausbildung intermolekularer Brücken dreidimensional-vernetzte Strukturen bilden können.

Typische Beispiele für Vernetzer sind chemische Verbindungen, die innerhalb des Moleküls oder an den beiden Molekülenden zwei oder mehr gleiche oder unterschiedliche funktionelle Gruppen aufweisen und folglich Moleküle gleicher oder auch unterschiedlicher Strukturen miteinander vernetzen können. Im Gegensatz zum Aktivator, wie oben beschrieben, wird ein Vernetzer in das Polymer-Netzwerk eingebaut.

Bevorzugte Vernetzer sind Diacrylate, Dimethacrylate, Triacrylate, Trimethacrylate, Tetraacrylate, Tetramethacrylate, höher funktionelle Acrylate und/oder höher funktionelle Methacrylate.

Bevorzugte Vernetzer sind somit gleichzeitig auch reaktive Monomere.

In besonders bevorzugten, erfindungsgemäßen Ausführungsformen werden Ethylenglykoldimethacrylat (CAS-Nr.: 97-90-5), Polyethylenglycoldimethacrylate (CAS-Nr.: 25852-47-5), Trimethyloylpropantriacrylat (CAS-Nr.: 15625-89-5), Trimethylolpropantrimethacrylat (CAS-Nr.: 3290-92-4), Trimethyloylpropanpropoxylattriacrylat (CAS-Nr.: 53879-54-2), Di(trimethylolpropane)tetraacrylat (CAS-Nr.: 94108-97-1), Bisphenol A glycerolate dimethacrylat (BIS-GMA, CAS-Nr.: 1565-94-2) und/ oder Bisphenol A dimethacrylate (BIS-DMA, CAS-Nr.: 3253-39-2) als Vernetzer eingesetzt.

### Weitere Bestandteile der reaktiven Klebstofffilme

Die reaktiven Klebstofffilme der vorliegenden Erfindung können gegebenenfalls weitere Additive und/oder Hilfsstoffe enthalten, die im Stand der Technik bekannt sind. Hier sind beispielsweise Füllstoffe, Farbstoffe, Keimbildner, rheologische Additive (zum Beispiel pyrogene Kieselsäure), Blähmittel, klebverstärkende Additive (Haftvermittler, insbesondere Silane, Tackifier-Harze), Compoundierungsmittel, Weichmacher und/oder Alterungs-, Licht- und UV-Schutzmittel, zum Beispiel in Form von primären und sekundären Antioxidantien zu nennen. Die weiteren Bestandteile der erfindungsgemäßen reaktiven Klebstofffilme können gleichzeitig auch reaktive Monomere sein. Dies kann insbesondere bevorzugt bei den Silan-Haftvermittlern der Fall sein. Bevorzugt wird in diesem Zusammenhang 3-Trimethoxysilylpropylmethacrylat (CAS-Nr.: 2530-85-0), erhältlich unter dem Handelsnamen Dynasylan^{®}MEMO von der Firma Evonik AG, Rellinghauser Straße 1-11, 45128 Essen, eingesetzt.

### Reaktiver Klebstofffilm

Wie hierin verwendet, soll der Begriff "Klebstofffilm" (oder auch Klebstoffschicht, Klebstofffolie) eine vollständig oder nicht-vollständig bereitgestellte Auftragung der jeweiligen Komponentenmischung, wie nachfolgend beschrieben, umfassen. So kann beispielsweise eine punktförmige Auftragung der Klebstoffkomponenten, die die zu verklebende Substratoberfläche(n) nicht vollständig bedeckt, ebenfalls zu einer dauerhaften Verklebung im Sinne der vorliegenden Erfindung führen.

In einer bevorzugten, erfindungsgemäßen Ausführungsform umfasst der mindestens eine, mit einem zweiten reaktiven Klebstofffilm oder mit einer zweiten Komponente härtbare, reaktive Klebstofffilm eine Mischung der folgenden Bestandteile: thermoplastisches Polyurethan, insbesondere Desmomelt^{®} 530, 3,4-Epoxycyclohexylmethylmethacrylat (CAS-Nr.: 82428-30-6), Trimethyloylpropan-propoxylat-triacrylat (CAS-Nr.: 53879-54-2), 3-Trimethoxysilylpropylmethacrylat (CAS-Nr.: 2530-85-0) und Diisopropylbenzol-hydroperoxid.

Jede der bevorzugten, erfindungsgemäßen Ausführungsformen enthält etwa 10 bis 90 Gew. % thermoplastisches Polyurethan, etwa 10 bis 90 Gew. % reaktive(s) Monomer(e) und etwa 1 bis 10 Gew. % Diisopropylbenzol-hydroperoxid, vorzugsweise etwa 20 bis 50 Gew. % thermoplastisches Polyurethan, etwa 40 bis 70 Gew. % reaktive(s) Monomer(e) und etwa 2 bis 8 Gew. % Diisopropylbenzol-hydroperoxid, bezogen auf die Gesamtmischung der Bestandteile des mindestens einen ersten, erfindungsgemäßen reaktiven Klebstofffilms A.

In einer weiteren bevorzugten, erfindungsgemäßen Ausführungsform umfasst der mindestens eine, mit einer zweiten Komponente oder mit einem zweiten reaktiven Klebstofffilm härtbare, reaktive Klebstofffilm eine Mischung der folgenden Bestandteile: thermoplastisches Polyurethan, insbesondere Desmomelt^{®} 530, 3,4-Epoxycyclohexylmethylmethacrylat (CAS-Nr.: 82428-30-6), Trimethyloylpropan-propoxylat-triacrylat (CAS-Nr.: 53879-54-2), 3-Trimethoxysilylpropylmethacrylat (CAS-Nr.: 2530-85-0) und Eisen(II)-phthalocyanin.

Jede der bevorzugten, erfindungsgemäßen Ausführungsformen enthält etwa 10 bis 90 Gew. % thermoplastisches Polyurethan, etwa 10 bis 90 Gew. % reaktive(s) Monomer(e) und größer 0 bis etwa 10 Gew. % Eisen(II)-phthalocyanin, vorzugsweise etwa 20 bis 50 Gew. % thermoplastisches Polyurethan, etwa 40 bis 70 Gew. % reaktive(s) Monomer(e) und etwa 0,1 bis 5 Gew. % Eisen(II)-phthalocyanin, bezogen auf die Gesamtmischung der Bestandteile des mindestens einen zweiten, erfindungsgemäßen reaktiven Klebstofffilms B.

Wie hierin verwendet, bezieht sich die Gesamtmischung der Bestandteile der erfindungsgemäßen reaktiven Klebstofffilme auf die gesamte Menge der eingesetzten polymeren Filmbildner-Matrix (a), der/des reaktiven Monomere/Monomers (b), des Reagens (c) sowie weiterer optional vorliegender Komponenten, die als Summe (in Gew.%) erhalten wird.

Die reaktiven Klebstofffilme der Erfindung besitzen in der Regel eine Schichtdicke im Bereich von etwa 20 bis 200 µm, bevorzugt etwa 30 bis 100 µm, bevorzugter etwa 40 bis 60 µm und besonders bevorzugt etwa 50 µm. Zur Herstellung größerer Schichtdicken kann es von Vorteil sein, mehrere Klebstofffilmschichten zusammen zu laminieren.

Zudem sind die erfindungsgemäßen, reaktiven Klebstofffilme dadurch gekennzeichnet, dass sie bevorzugt haftklebrige Eigenschaften besitzen. Als haftklebrige Stoffe sind gemäß Römpp solche viskoelastischen Klebstoffe definiert (Römpp Online 2013, Dokumentkennung RD-08-00162), deren abgebundener, trockener Film bei Raumtemperatur permanent klebrig ist und klebfähig bleibt. Die Haftklebung erfolgt durch leichten Anpressdruck sofort auf fast allen Substraten. Als leichter Anpressdruck ist hier ein Anpressdruck von größer 0 bar, der für eine Dauer von größer 0 Sekunden ausgeübt wird, gemeint.

### Reaktives Klebstofffilm-System

Erfindungsgemäß wird ein reaktives Klebstofffilm-System bereitgestellt, umfassend zwei oder mehrere reaktive Klebstofffilme, wie oben definiert, dadurch gekennzeichnet, dass ein erster reaktiver Klebstofffilm A einen Radikalinitiator enthält und ein zweiter reaktiver Klebstofffilm B einen Aktivator enthält und diese beiden reaktiven Klebstofffilme A und B jeweils abwechselnd vorliegen.

Der erste und der zweite reaktive Klebstofffilm, wie oben beschrieben, sind dadurch gekennzeichnet, dass der erste reaktive Klebstofffilm A, neben der Filmbildner-Matrix (a) und mindestens einem reaktiven Monomer (b), einen Radikalinitiator (c), enthält und der zweite reaktive Klebstofffilm B, neben der Filmbildner-Matrix (a) und mindestens einem reaktiven Monomer (b), einen Aktivator (c) enthält. Bevorzugt wird Eisen(II)-phthalocyanin als Aktivator eingesetzt.

Ausgehärtet werden die reaktiven Klebstofffilme durch in Kontakt bringen von Klebstoffilm A mit Klebstofffilm B beziehungsweise von Klebstoffilm B mit Klebstofffilm A.

Das in Kontakt bringen erfolgt auf breiter Fläche unter mäßigem Druck, insbesondere bei 0,5 bis 3 bar bei Raumtemperatur (23°C). Wahlweise sind höhere bzw. niedrigere Temperaturen und Drucke auch möglich. Der genannte mäßige Druck soll insbesondere leicht von Hand zu erreichen sein. Die Kontaktzeit beträgt erfindungsgemäß bei Raumtemperatur einige Sekunden bis einige Minuten, bevorzugt 10 bis 60 Sekunden. Der Druck kann maschinell oder manuell aufgebracht werden.

Werden die beiden reaktiven Klebstofffilme A und B, wie oben beschrieben, zuvor auf den zu verklebenden Substraten aufgebracht, kommt durch die oben beschriebene Aushärtung und gegebenenfalls Vernetzung eine dauerhafte Verklebung der Substrate zu Stande. Alternativ kann auch Klebstofffilm A auf das eine zu verklebende Substrat und Komponente B auf das andere zu verklebende Substrat aufgebracht werden. Weiterhin alternativ kann auch Komponente A auf das eine zu verklebende Substrat und Klebstofffilm B auf das andere zu verklebende Substrat aufgebracht werden.

Eine weitere alternative Vorgehensweise sieht vor, dass zunächst Klebstofffilm A auf das eine zu verklebende Substrat aufgebracht und auf Klebstofffilm A Klebstofffilm B oder eine Komponente B aufgebracht werden. Anschließend wird dann das andere zu verklebende Substrat auf Klebstofffilm B beziehungsweise Komponente B aufgebracht. Statt Klebstofffilm A kann auch zunächst Komponente A auf das eine zu verklebende Substrat aufgebracht und auf Komponente A Klebstofffilm B aufgebracht werden.

Weiterhin alternativ kann auch zunächst Klebstofffilm B auf das eine zu verklebende Substrat aufgebracht und auf Klebstofffilm B Klebstofffilm A oder eine Komponente A aufgebracht werden. Anschließend wird dann das zweite zu verklebende Substrat auf Klebstofffilm A beziehungsweise Komponente A aufgebracht. Statt Klebstofffilm B kann auch zunächst Komponente B auf das eine zu verklebende Substrat aufgebracht und auf Komponente B Klebstofffilm A aufgebracht werden.

Weiterhin kann das reaktive Klebstofffilmsystem der Erfindung weitere Filme, Schichten, Klebstoffe sowie permanente und oder temporäre Träger umfassen.

Geeignete Trägermaterialien sind einem Fachmann auf dem Gebiet bekannt. Beispielsweise können als permanente Träger Folien (Polyester, PET, PE, PP, BOPP, PVC, Polyimide), Vliese, Schäume, Gewebe und/oder Gewebefolien verwendet werden. Temporäre Träger sollten mit einer Trennschicht versehen sein, wobei die Trennschicht in der Regel aus einem Silikontrennlack oder einem fluorierten Trennlack besteht oder polyolefinischen Charakter (HDPE, LDPE) aufweist.

Gegebenenfalls kann es notwendig sein, dass die Oberflächen der zu verklebenden Substrate durch ein physikalisches, chemisches und/oder physikalisch-chemisches Verfahren vorbehandelt werden. Hier ist beispielsweise das Aufbringen eines Primers oder einer Haftvermittlerzusammensetzung vorteilhaft.

### Substrate

Geeignete Substrate, die zur Verklebung mit dem erfindungsgemäßen reaktiven Klebstofffilm bzw. dem reaktiven Klebstofffilm-System geeignet sind, sind Metalle, Glas, Beton, Stein, Keramik, Textil und/ oder Kunststoffe. Die zu verklebenden Substrate können gleich oder verschieden sein.

Bevorzugt wird der erfindungsgemäße reaktive Klebstofffilm bzw. das erfindungsgemäße, reaktive Klebstofffilm-System zur Verklebung von Metallen, Glas und Kunststoffen eingesetzt. Besonders bevorzugt werden Polycarbonat, Polyamid oder eloxiertes Aluminium verklebt.

Die zu verklebenden Metallsubstrate können generell aus allen geläufigen Metallen und Metalllegierungen gefertigt werden. Bevorzugt kommen Metalle, wie zum Beispiel Aluminium, Edelstahl, Stahl, Magnesium, Zink, Nickel, Messing, Kupfer, Titan, eisenhaltige Metalle und Legierungen zum Einsatz. Die zu verklebenden Teile können außerdem aus unterschiedlichen Metallen aufgebaut sein.

Geeignete Kunststoffsubstrate sind beispielsweise Acrylnitril-Butadien-Styrol-Copolymere (ABS), Polycarbonate (PC), ABS/PC-Blends, PMMA, Polyamide, Glasfaserverstärkte Polyamide, Polyvinylchlorid, Polyvinylenfluorid, Cellulose Acetat, Cycloolefin-Copolymere, Flüssigkristallpolymere (LCP), Polylactid, Polyetherketone, Polyetherimid, Polyethersulfon, Polymethacrylmethylimid, Polymethylpenten, Polyphenylether, Polyphenylensulfid, Polyphthalamid, Polyurethane, Polyvinylacetat, Styrol Acrylnitril Copolymere, Polyacrylate bzw. Polymethacrylate, Polyoxymethylen, Acrylester-Styrol-Acrylnitril Copolymere, Polyethylen, Polystyrol, Polypropylen und/oder Polyester, wie z.B. Polybutylenterephthalate (PBT) und/oder Polyethylenterephthalat (PET).

Substrate können lackiert, bedruckt, bedampft oder besputtert sein.

Die zu verklebenden Substrate können jede beliebige Form annehmen, die für die Verwendung des resultierenden Verbundkörpers erforderlich ist. In der einfachsten Form sind die Substrate eben. Außerdem können auch dreidimensionale Substrate, die z.B. geneigt sind, mit dem erfindungsgemäßen, reaktiven Klebstofffilm-System verklebt werden. Die zu verklebenden Substrate können auch die verschiedensten Funktionen einnehmen, wie zum Beispiel Gehäuse, Sichtfenster, Versteifungselemente, etc.

### Verfahren zur Herstellung eines reaktiven Klebstofffilms

Die erfindungsgemäßen, reaktiven Klebstofffilme werden durch das nachfolgend beschriebene Verfahren hergestellt:
In einem ersten Schritt werden die Inhaltsstoffe in einem oder mehreren Lösemittel(n) und/oder Wasser gelöst bzw. fein verteilt. Alternativ ist kein Lösemittel und/oder Wasser notwendig, da die Inhaltsstoffe bereits vollständig ineinander löslich sind (ggf. unter Einwirkung von Wärme und/oder Scherung). Geeignete Lösemittel sind im Stand der Technik bekannt, wobei bevorzugt Lösemittel eingesetzt werden, in denen mindestens einer der Inhaltsstoffe eine gute Löslichkeit aufweist. Besonders bevorzugt ist Aceton.

Wie hierin verwendet, umfasst der Begriff Inhaltsstoff die polymere Filmbildner-Matrix, mindestens ein reaktives Monomer, ein Reagens, ausgewählt aus einem Initiator, insbesondere Radikalinitiator oder einem Aktivator, sowie gegebenenfalls weitere Additive und/oder Hilfsstoffe, wie oben definiert.

Anschließend werden die aufgelösten oder fein verteilten Inhaltsstoffe in einem zweiten Schritt vermischt. Zur Herstellung der Mischung werden übliche Rührgeräte eingesetzt. Gegebenenfalls wird die Lösung zudem erwärmt. Ggf. werden die Inhaltsstoffe gleichzeitig aufgelöst bzw. feinverteilt und vermischt.

Daraufhin wird in einem dritten Schritt ein Trennliner, ein Trennpapier, ein Trägermaterial oder ein Haftklebstoff mit der Mischung der aufgelösten bzw. fein verteilten Inhaltsstoffe nach Schritt 2 beschichtet. Die Beschichtung erfolgt nach den üblichen Techniken, die im Stand der Technik bekannt sind.

Nach der Beschichtung wird das Lösemittel in einem vierten Schritt durch Abdampfen entfernt.

Gegebenenfalls kann der reaktive Klebstofffilm in einem weiteren Schritt zu einer Rolle aufgewickelt werden.

Zur Lagerung werden die erfindungsgemäßen, reaktiven Klebstofffilme mit einem Trennliner oder -papier abgedeckt.

Alternativ werden die erfindungsgemäßen, reaktiven Klebstofffilme lösungsmittelfrei durch Extrusion, Hotmeltdüsenbeschichtung oder Kalandrieren hergestellt.

### Kit zur Bereitstellung eines erfindungsgemäßen, reaktiven 2-Komponentenklebesystems in Filmform

Außerdem wird erfindungsgemäß ein Kit zur Bereitstellung eines reaktiven 2-Komponentenklebesystems in Filmform bereitgestellt. Dieses Kit umfasst mindestens einen ersten reaktiven Klebstofffilm A, der einen Radikalinitiator, enthält, wie oben beschrieben, und mindestens einen zweiten reaktiven Klebstofffilm B, der einen Aktivator enthält, wie oben beschrieben.

Typischerweise wird das erfindungsgemäße Kit wie folgt verwendet:
Der mindestens eine erste reaktive Klebstofffilm A wird auf eine Oberfläche eines zu verklebenden Substrats aufgebracht. Außerdem wird der mindestens eine zweite reaktive Klebstofffilm B auf eine Oberfläche eines zweiten zu verklebenden Substrats aufgebracht. Klebstofffilm A und Klebstofffilm B werden in Kontakt gebracht und über Verpresszeiten im Bereich von einigen Sekunden bis zu mehreren Minuten bei Raumtemperatur (23°C) in Kontakt gelassen, wodurch die Polymerisationsreaktion startet und der Klebstoff aushärtet. Alternativ kann der mindestens eine zweite Klebstofffilm B auch auf den ersten Klebstofffilm A aufgebracht werden und erst anschließend die Oberfläche eines zweiten zu verklebenden Substrats darauf aufgebracht werden.

Gegebenenfalls kann das oben beschriebene Verfahren wiederholt werden, um so eine Verklebung der Schichten Substrat-A-B-A-B-Substrat oder Substrat-B-A-B-Substrat oder Substrat-A-B-A-Substrat, etc. zu erreichen. Dies kann vorteilhaft sein, wenn unterschiedliche ausgeprägte Hafteigenschaften zwischen den zu verklebenden Substraten und den ersten und zweiten Klebstofffilmen A und B gegeben sind.

### Verbundkörper

Zuletzt wird erfindungsgemäß ein Verbundkörper bereitgestellt, der durch den reaktiven Klebstofffilm bzw. das reaktive Klebstofffilm-System, wie oben definiert, oder durch das erfindungsgemäße Kit, wie oben definiert, verbunden ist.

### Produkteigenschaften

Der erfindungsgemäße reaktive Klebstofffilm bzw. das erfindungsgemäße, reaktive Klebstofffilm-System, umfassend zwei reaktive Klebstofffilme zeigen hervorragende Produkteigenschaften, die auch für den Fachmann derartig nicht vorherzusehen waren. Es werden generell hohe Verklebungsfestigkeiten erzielt. Verklebungen von Polyamid führen zu dem überraschenden Ergebnis, dass die Verklebungsfestigkeit nach einer Feuchtwärmebehandlung der bereits ausgehärteten Verklebung im Vergleich zum Frischwert signifikant ansteigt. Insbesondere dieses Ergebnis stellt gegenüber dem Stand der Technik eine deutliche Verbesserung dar. In Push-Out-Prüfungen werden nach einer dreitägigen Feuchtwärmebehandlung (60°C / 95% relative Luftfeuchtigkeit) der ausgehärteten Verklebung von Polyamid- gegen Polycarbonat-Prüfkörpern teilweise Werte von ca. 6 MPa erreicht (siehe Beispiele). Von solchen Ergebnissen ist im Zusammenhang mit reaktiven Klebstofffilm-Systemen bislang nichts berichtet worden. Bei Verklebungen von Polycarbonat- gegen Polycarbonat-Prüfkörpern werden zum Teil Werte von größer als 7 MPa erreicht (siehe Beispiele) und bei Verklebungen von eloxiertem Aluminium gegen Polycarbonat werden Werte von über 4 MPa erreicht (siehe Beispiele). Andere, als die erfindungsgemäß ausgewählten reaktiven Monomere wurde ebenfalls geprüft. Mit diesen nicht erfindungsgemäßen Monomeren wurden bei Verklebungen von Polyamid nur sehr geringe Verklebungsfestigkeiten erzielt (siehe Vergleichsbeispiele).

### Experimenteller Teil

Die nachfolgenden Beispiele dienen zur Verdeutlichung der vorliegenden Erfindung, sollen aber keinesfalls als Einschränkung des Schutzbereichs verstanden werden.

### Herstellung einer Lösung der Filmbildner-Matrix

### Polyurethan (PU) - Lösung:

Eine 20%ige acetonische Lösung des filmbildenden Polymers wird hergestellt, indem zunächst 120 g Desmomelt^{®} 530 und 480 g Aceton in ein Schraubglas eingewogen werden und das Schraubglas verschlossen wird. Durch mehrtägiges Rollen des Schraubglases auf einer Rollbank wird das Desmomelt^{®} 530 vollständig in Lösung gebracht. Je nach Rollgeschwindigkeit dauert der Vorgang etwa ein bis sieben Tage. Alternativ kann die acetonische Lösung auch durch Rühren des Desmomelt^{®} 530-Granulats in Aceton mit einem handelsüblichen Laborrührer hergestellt werden.

### Beispiel 1

### Herstellung des ersten reaktiven, haftklebrigen Klebstofffilms A, umfassend einen Radikalinitiator

172,95 g der 20%igen acetonischen Lösung von Desmomelt^{®} 530 (PU-Lösung) werden mit 46,18 g 3,4-Epoxycyclohexylmethylmethacrylat (TTA^{®}15), 2,95 g Trimethyloylpropan-propoxylat-triacrylat, 0,99 g 3-Trimethoxysilylpropylmethacrylat (Dynasylan MEMO), 9,83 g Peroxan^{®} IHP-50 und 10,37 g Aerosil^{®} R202 (hydrophobierte pyrogene Kieselsäure, Firma Evonik Industries AG) mit einem handelsüblichen Laborrührer 60 Minuten gemischt.

Die erhaltene homogene Mischung wird mit Hilfe eines handelsüblichen Laborstreichtisches (zum Beispiel von der Firma SMO (Sondermaschinen Oschersleben GmbH)) mit einem Streichmesser auf einer silikonisierten Polyesterfolie (Trennliner) ausgestrichen. Anschließend wird das Aceton bei 60°C im Umlufttrockenschrank 10 Minuten abgedampft. Die Spaltbreite beim Ausstreichen wird so eingestellt, dass nach dem Abdampfen des Lösemittels ein 50 µm dicker Film erhalten wird. Der erhaltene haftklebrige, reaktive Film A wird bis zur Verklebung mit einer zweiten silikonisierten Polyesterfolie (Trennliner) abgedeckt und aufbewahrt.

### Herstellung des zweiten reaktiven, haftklebrigen Klebstofffilms B, umfassend einen Aktivator

183,15 g der 20%igen acetonischen Lösung von Desmomelt^{®} 530 (PU-Lösung) werden mit 47,34 g 3,4-Epoxycyclohexylmethylmethacrylat (TTA^{®}15), 3,02 g Trimethyloylpropan-propoxylat-triacrylat, 1,01 g 3-Trimethoxysilylpropylmethacrylat (Dynasylan MEMO), 1,01 g Eisen(II)-phthalocyanin und 10,99 g Aerosil^{®} R202 (hydrophobierte pyrogene Kieselsäure, Firma Evonik Industries AG) mit einem handelsüblichen Laborrührer 60 Minuten gemischt.

Die erhaltene homogene Mischung wird mit Hilfe eines handelsüblichen Laborstreichtisches mit einem Streichmesser auf einer silikonisierten Polyesterfolie (Trennliner) ausgestrichen. Anschließend wird das Aceton bei 60°C im Umlufttrockenschrank 10 Minuten abgedampft. Die Spaltbreite beim Ausstreichen wird so eingestellt, dass nach dem Abdampfen des Lösemittels ein 50 µm dicker Film erhalten wird. Der erhaltene haftklebrige Film B wird bis zur Verklebung mit einer zweiten silikonisierten Polyesterfolie (Trennliner) abgedeckt und aufbewahrt.

Die prozentualen Zusammensetzungen der reaktiven Klebstofffilme A und B sowie die Einwaagen zur Herstellung der vorausgegangenen Lösungen sind in der folgenden Tabelle aufgeführt:

### Beispiel 1, Lösung und reaktiver Klebstofffilm A

| Rohstoff | Gew.% Feststoff* | Einwaage (g) mit Lösemittel |
|---|---|---|
| Desmomelt^{®} 530 | 34,59 | |
| Desmomelt^{®} 530-Lösung in Aceton (20 Gew.% Desmomelt^{®} 530 in Aceton) | | 172,95 |
| 3,4-Epoxycyclohexylmethylmethacrylat (TTA^{®} 15) | 46,18 | 46,18 |
| Trimethyloylpropan-propoxylat-triacrylat | 2,95 | 2,95 |
| (Dynasylan^{®} MEMO)** | 0,99 | 0,99 |
| Diisopropylhydroperoxid | 4,92 | |
| Peroxan^{®} IHP-50*** | | 9,84 |
| Aerosil^{®} R 202**** | 10,37 | 10,37 |
| Summe | 100,00 | 243,28 |

| | | |
|---|---|---|
| * Unter Feststoff werden hier alle Stoffe verstanden, die nicht Lösemittel sind. Lösemittel sind hier Aceton und Diisopropybenzol. ** 3-Trimethoxysilylpropylmethacrylat, Fa. Evonik *** 50 gew.%ige Lösung von Diisopropylhydroperoxid in Diisopropylbenzol, Fa. Pergan ****hydrophobierte pyrogene Kieselsäure, Fa. Evonik | | |

### Beispiel 1, Lösung und reaktiver Klebstofffilm B

| Rohstoff | Gew.% Feststoff* | Einwaage (g) mit Lösemittel |
|---|---|---|
| Desmomelt^{®} 530 | 36,63 | |
| Desmomelt^{®} 530-Lösung in Aceton (20 Gew.% Desmomelt^{®} 530 in Aceton) | | 183,15 |
| 3,4-Epoxycyclohexylmethylmethacrylat (TTA^{®} 15) | 47,34 | 47,34 |
| Trimethyloylpropan-propoxylat-triacrylat | 3,02 | 3,02 |
| (Dynasylan^{®} MEMO)** | 1,01 | 1,01 |
| Eisen(II)-phthalocyanin | 1,01 | 1,01 |
| Aerosil^{®} R 202*** | 10,99 | 10,99 |
| Summe | 100,00 | 246,52 |

| | | |
|---|---|---|
| * Unter Feststoff werden hier alle Stoffe verstanden, die nicht Lösemittel sind. Lösemittel ist hier Aceton. ** 3-Trimethoxysilylpropylmethacrylat, Fa. Evonik *** hydrophobierte pyrogene Kieselsäure, Fa. Evonik | | |

In analoger Weise wie in Beispiel 1 werden die Lösungen und reaktiven Klebstofffilme A und B der weiteren Beispiele und Vergleichsbeispiele hergestellt.

Die folgenden Tabellen geben Auskunft über die Zusammensetzungen der Lösungen und reaktiven Klebstofffilme A und B in den weiteren Beispielen und Vergleichsbeispielen.

### Beispiel 2, Lösung und reaktiver Klebstofffilm A

| Rohstoff | Gew.% Feststoff* | Einwaage (g) mit Lösemittel |
|---|---|---|
| Desmomelt^{®} 530 | 35,59 | |
| Desmomelt^{®} 530-Lösung in Aceton (20 Gew.% Desmomelt^{®} 530 in Aceton) | | 177,94 |
| 3,4-Epoxycyclohexylmethylmethacrylat (TTA^{®} 15) | 47,51 | 47,51 |
| Polyethylenglycoldimethacrylat (550)** | 1,17 | 1,17 |
| Diisopropylhydroperoxid | 5,06 | |
| Peroxan^{®} IHP-50*** | | 10,12 |
| Aerosil^{®} R 202**** | 10,67 | 10,67 |
| Summe | 100,00 | 247,41 |

| | | |
|---|---|---|
| * Unter Feststoff werden hier alle Stoffe verstanden, die nicht Lösemittel sind. Lösemittel sind hier Aceton und Diisopropybenzol. ** zahlengemittelte mittlere Molmasse Mn = 550, CAS: 25852-47-5 *** 50 gew.%ige Lösung von Diisopropylhydroperoxid in Diisopropylbenzol, Fa. Pergan **** hydrophobierte pyrogene Kieselsäure, Fa. Evonik | | |

### Beispiel 2, Lösung und reaktiver Klebstofffilm B

| Rohstoff | Gew.% Feststoff* | Einwaage (g) mit Lösemittel |
|---|---|---|
| Desmomelt^{®} 530 | 37,71 | |
| Desmomelt^{®} 530-Lösung in Aceton (20 Gew.% Desmomelt^{®} 530 in Aceton) | | 188,56 |
| 3,4-Epoxycyclohexylmethylmethacrylat (TTA^{®} 15) | 48,74 | 48,74 |
| Polyethylenglycoldimethacrylat (550)** | 1,19 | 1,19 |
| Eisen(I I)-phthalocyanin | 1,04 | 1,04 |
| Aerosil^{®} R 202*** | 11,32 | 11,32 |
| Summe | 100,00 | 250,85 |

| | | |
|---|---|---|
| * Unter Feststoff werden hier alle Stoffe verstanden, die nicht Lösemittel sind. Lösemittel ist hier Aceton. ** zahlengemittelte mittlere Molmasse Mn = 550, CAS: 25852-47-5 *** hydrophobierte pyrogene Kieselsäure, Fa. Evonik | | |

### Beispiel 3, Lösung und reaktiver Klebstofffilm A

| Rohstoff | Gew.% Feststoff* | Einwaage (g) mit Lösemittel |
|---|---|---|
| Desmomelt^{®} 530 | 34,59 | |
| Desmomelt^{®} 530-Lösung in Aceton (20 Gew.% Desmomelt^{®} 530 in Aceton) | | 172,95 |
| 3,4-Epoxycyclohexylmethylmethacrylat (TTA^{®} 15) | 23,09 | 23,09 |
| 2-Hydroxy-3-phenoxypropylacrylat | 23,09 | 23,09 |
| Trimethyloylpropan-propoxylat-triacrylat | 2,95 | 2,95 |
| (Dynasylan^{®} MEMO)** | 0,99 | 0,99 |
| Diisopropylhydroperoxid | 4,92 | |
| Peroxan^{®} IHP-50*** | | 9,84 |
| Aerosil^{®} R 202**** | 10,37 | 10,37 |
| Summe | 100,00 | 243,28 |

| | | |
|---|---|---|
| * Unter Feststoff werden hier alle Stoffe verstanden, die nicht Lösemittel sind. Lösemittel sind hier Aceton und Diisopropybenzol. ** 3-Trimethoxysilylpropylmethacrylat, Fa. Evonik *** 50 gew.%ige Lösung von Diisopropylhydroperoxid in Diisopropylbenzol, Fa. Pergan **** hydrophobierte pyrogene Kieselsäure, Fa. Evonik | | |

### Beispiel 3, Lösung und reaktiver Klebstofffilm B

| Rohstoff | Gew.% Feststoff* | Einwaage (g) mit Lösemittel |
|---|---|---|
| Desmomelt^{®} 530 | 36,63 | |
| Desmomelt^{®} 530-Lösung in Aceton | | 183,15 |
| (20 Gew.% Desmomelt^{®} 530 in Aceton) | | |
| 3,4-Epoxycyclohexylmethylmethacrylat (TTA^{®} 15) | 23,67 | 23,67 |
| 2-Hydroxy-3-phenoxypropylacrylat | 23,67 | 23,67 |
| Trimethyloylpropan-propoxylat-triacrylat | 3,02 | 3,02 |
| (Dynasylan^{®} MEMO)** | 1,01 | 1,01 |
| Eisen(II)-phthalocyanin | 1,01 | 1,01 |
| Aerosil^{®} R 202*** | 10,99 | 10,99 |
| Summe | 100,00 | 246,52 |

| | | |
|---|---|---|
| * Unter Feststoff werden hier alle Stoffe verstanden, die nicht Lösemittel sind. Lösemittel ist hier Aceton. ** 3-Trimethoxysilylpropylmethacrylat, Fa. Evonik *** hydrophobierte pyrogene Kieselsäure, Fa. Evonik | | |

### Beispiel 4, Lösung und reaktiver Klebstofffilm A

| Rohstoff | Gew.% Feststoff* | Einwaage (g) mit Lösemittel |
|---|---|---|
| Desmomelt^{®} 530 | 35,35 | |
| Desmomelt^{®} 530-Lösung in Aceton (20 Gew.% Desmomelt^{®} 530 in Aceton) | | 176,75 |
| 3,4-Epoxycyclohexylmethylmethacrylat (TTA^{®} 15) | 5,05 | 5,05 |
| 2-Phenoxyethylmethacrylat | 28,28 | 28,28 |
| N-Vinylcaprolactam | 10,10 | 10,10 |
| Trimethylolpropantrimethacrylat | 3,03 | 3,03 |
| (Dynasylan^{®} MEMO)** | 1,01 | 1,01 |
| Cumolhydroperoxid | 9,09 | |
| Peroxan^{®} CU-90L*** | | 10,10 |
| Aerosil^{®} R 202**** | 8,09 | 8,09 |
| Summe | 100,00 | 242,41 |

| | | |
|---|---|---|
| * Unter Feststoff werden hier alle Stoffe verstanden, die nicht Lösemittel sind. Lösemittel sind hier Aceton und Cumol. ** 3-Trimethoxysilylpropylmethacrylat, Fa. Evonik *** 90 gew.%ige Lösung von Cumolhydroperoxid in Cumol, Fa. Pergan **** hydrophobierte pyrogene Kieselsäure, Fa. Evonik | | |

### Beispiel 4, Lösung und reaktiver Klebstofffilm B

| Rohstoff | Gew.% Feststoff* | Einwaage (g) mit Lösemittel |
|---|---|---|
| Desmomelt^{®} 530 | 38,50 | |
| Desmomelt^{®} 530-Lösung in Aceton (20 Gew.% Desmomelt^{®} 530 in Aceton) | | 192,50 |
| 3,4-Epoxycyclohexylmethylmethacrylat (TTA^{®} 15) | 5,50 | 5,50 |
| 2-Phenoxyethylmethacrylat | 30,80 | 30,80 |
| N-Vinylcaprolactam | 11,00 | 11,00 |
| Trimethylolpropantrimethacrylat | 3,30 | 3,30 |
| (Dynasylan^{®} MEMO)** | 1,10 | 1,10 |
| Eisen(II)-phthalocyanin | 1,00 | 1,00 |
| Aerosil^{®} R 202*** | 8,80 | 8,80 |
| Summe | 100,0 | 254,00 |

| | | |
|---|---|---|
| * Unter Feststoff werden hier alle Stoffe verstanden, die nicht Lösemittel sind. Lösemittel ist hier Aceton. ** 3-Trimethoxysilylpropylmethacrylat, Fa. Evonik *** hydrophobierte pyrogene Kieselsäure, Fa. Evonik | | |

### Beispiel 5, Lösung und reaktiver Klebstofffilm A

| Rohstoff | Gew.% Feststoff* | Einwaage (g) mit Lösemittel |
|---|---|---|
| Desmomelt^{®} 530 | 34,59 | |
| Desmomelt^{®} 530-Lösung in Aceton (20 Gew.% Desmomelt^{®} 530 in Aceton) | | 172,95 |
| 3,4-Epoxycyclohexylmethylacrylat (TTA^{®} 16) | 46,18 | 46,18 |
| Trimethyloylpropan-propoxylat-triacrylat | 2,95 | 2,95 |
| (Dynasylan^{®} MEMO)** | 0,99 | 0,99 |
| Diisopropylhydroperoxid | 4,92 | |
| Peroxan^{®} IHP-50*** | | 9,84 |
| Aerosil^{®} R 202**** | 10,37 | 10,37 |
| Summe | 100,00 | 243,28 |

| | | |
|---|---|---|
| * Unter Feststoff werden hier alle Stoffe verstanden, die nicht Lösemittel sind. Lösemittel sind hier Aceton und Diisopropybenzol. ** 3-Trimethoxysilylpropylmethacrylat, Fa. Evonik *** 50 gew.%ige Lösung von Diisopropylhydroperoxid in Diisopropylbenzol, Fa. Pergan **** hydrophobierte pyrogene Kieselsäure, Fa. Evonik | | |

### Beispiel 5, Lösung und reaktiver Klebstofffilm B

| Rohstoff | Gew.% Feststoff* | Einwaage (g) mit Lösemittel |
|---|---|---|
| Desmomelt^{®} 530 | 36,63 | |
| Desmomelt^{®} 530-Lösung in Aceton (20 Gew.% Desmomelt^{®} 530 in Aceton) | | 183,15 |
| 3,4-Epoxycyclohexylmethylacrylat (TTA^{®} 16) | 47,34 | 47,34 |
| Trimethyloylpropan-propoxylat-triacrylat | 3,02 | 3,02 |
| (Dynasylan^{®} MEMO)** | 1,01 | 1,01 |
| Eisen(II)-phthalocyanin | 1,01 | 1,01 |
| Aerosil^{®} R 202*** | 10,99 | 10,99 |
| Summe | 100,00 | 246,52 |

| | | |
|---|---|---|
| * Unter Feststoff werden hier alle Stoffe verstanden, die nicht Lösemittel sind. Lösemittel ist hier Aceton. ** 3-Trimethoxysilylpropylmethacrylat, Fa. Evonik *** hydrophobierte pyrogene Kieselsäure, Fa. Evonik | | |

### Beispiel 6, Lösung und reaktiver Klebstofffilm A

| Rohstoff | Gew.% Feststoff* | Einwaage (g) mit Lösemittel |
|---|---|---|
| Desmomelt^{®} 530 | 35,35 | |
| Desmomelt^{®} 530-Lösung in Aceton (20 Gew.% Desmomelt^{®} 530 in Aceton) | | 176,75 |
| 1,2-Epoxy-4-vinylcyclohexan (TTA^{®} 11) | 5,05 | 5,05 |
| 2-Phenoxyethylmethacrylat | 28,28 | 28,28 |
| N-Vinylcaprolactam | 10,10 | 10,10 |
| Trimethylolpropantrimethacrylat | 3,03 | 3,03 |
| (Dynasylan^{®} MEMO)** | 1,01 | 1,01 |
| Cumolhydroperoxid | 9,09 | |
| Peroxan^{®} CU-90L*** | | 10,10 |
| Aerosil^{®} R 202**** | 8,09 | 8,09 |
| Summe | 100,00 | 242,41 |

| | | |
|---|---|---|
| * Unter Feststoff werden hier alle Stoffe verstanden, die nicht Lösemittel sind. Lösemittel sind hier Aceton und Cumol. ** 3-Trimethoxysilylpropylmethacrylat, Fa. Evonik *** 90 gew.%ige Lösung von Cumolhydroperoxid in Cumol, Fa. Pergan **** hydrophobierte pyrogene Kieselsäure, Fa. Evonik | | |

### Beispiel 6, Lösung und reaktiver Klebstofffilm B

| Rohstoff | Gew.% Feststoff* | Einwaage (g) mit Lösemittel |
|---|---|---|
| Desmomelt^{®} 530 | 38,50 | |
| Desmomelt^{®} 530-Lösung in Aceton (20 Gew.% Desmomelt^{®} 530 in Aceton) | | 192,50 |
| 1,2-Epoxy-4-vinylcyclohexan (TTA^{®} 11) | 5,50 | 5,50 |
| 2-Phenoxyethylmethacrylat | 30,80 | 30,80 |
| N-Vinylcaprolactam | 11,00 | 11,00 |
| Trimethylolpropantrimethacrylat | 3,30 | 3,30 |
| (Dynasylan^{®} MEMO)** | 1,10 | 1,10 |
| Eisen(II)-phthalocyanin | 1,00 | 1,00 |
| Aerosil^{®} R 202*** | 8,80 | 8,80 |
| Summe | 100,00 | 254,00 |

| | | |
|---|---|---|
| * Unter Feststoff werden hier alle Stoffe verstanden, die nicht Lösemittel sind. Lösemittel ist hier Aceton. ** 3-Trimethoxysilylpropylmethacrylat, Fa. Evonik *** hydrophobierte pyrogene Kieselsäure, Fa. Evonik | | |

### Komponente A als Alternative zu den reaktiven Klebstofffilmen A zur Härtung der reaktiven Klebstofffilme B in allen Beispielen und Vergleichsbeispielen

| Rohstoff | Gew.% |
|---|---|
| Aceton | 90,0 |
| Peroxan^{®} CU-90L* | 10,0 |
| Summe | 100,00 |

| | |
|---|---|
| * 90 gew.%ige Lösung von Cumolhydroperoxid in Cumol, Fa. Pergan | |

Komponente A wird mit einem Pinsel in dünner Schicht direkt auf die offene Seite des reaktiven Klebstofffilms B aufgebracht, nachdem dieser zuvor auf eines der zu verklebenden Substrate geklebt wurde und die silikonisierte Polyesterfolie entfernt wurde. Im Anschluss daran wird binnen fünf Minuten darauf das andere Substrat geklebt.

### Komponente B als Alternative zu den reaktiven Klebstofffilmen B zur Härtung der reaktiven Klebstofffilme A in allen Beispielen und Vergleichsbeispielen

| | Gew.% |
|---|---|
| Isopropanol | 95,0 |
| Eisen(II)-phthalocyanin | 5,0 |
| Summe | 100,00 |

Komponente B wird mit einem Pinsel in dünner Schicht direkt auf die offene Seite des reaktiven Klebstofffilms A aufgebracht, nachdem dieser zuvor auf eines der zu verklebenden Substrate geklebt wurde und die silikonisierte Polyesterfolie entfernt wurde. Im Anschluss daran wird binnen fünf Minuten darauf das andere Substrat geklebt.

### Vergleichsbeispiele

### Vergleichsbeispiel 1, Lösung und reaktiver Klebstofffilm A

| Rohstoff | Gew.% Feststoff* | Einwaage (g) mit Lösemittel |
|---|---|---|
| Desmomelt^{®} 530 | 34,59 | |
| Desmomelt^{®} 530-Lösung in Aceton | | 172,95 |
| (20 Gew.% Desmomelt^{®} 530 in Aceton) | | |
| 2-Hydroxy-3-phenoxypropylacrylat | 46,18 | 46,18 |
| Trimethyloylpropan-propoxylat-triacrylat | 2,95 | 2,95 |
| (Dynasylan^{®} MEMO)** | 0,99 | 0,99 |
| Diisopropylhydroperoxid | 4,92 | |
| Peroxan^{®} IHP-50*** | | 9,84 |
| Aerosil^{®} R 202**** | 10,37 | 10,37 |
| Summe | 100,00 | 243,28 |

| | | |
|---|---|---|
| * Unter Feststoff werden hier alle Stoffe verstanden, die nicht Lösemittel sind. Lösemittel sind hier Aceton und Diisopropybenzol. ** 3-Trimethoxysilylpropylmethacrylat, Fa. Evonik *** 50 gew.%ige Lösung von Diisopropylhydroperoxid in Diisopropylbenzol, Fa. Pergan **** hydrophobierte pyrogene Kieselsäure, Fa. Evonik | | |

### Vergleichsbeispiel 1, Lösung und reaktiver Klebstofffilm B

| Rohstoff | Gew.% Feststoff* | Einwaage (g) mit Lösemittel |
|---|---|---|
| Desmomelt^{®} 530 | 36,63 | |
| Desmomelt^{®} 530-Lösung in Aceton (20 Gew.% Desmomelt^{®} 530 in Aceton) | | 183,15 |
| 2-Hydroxy-3-phenoxypropylacrylat | 47,34 | 47,34 |
| Trimethyloylpropan-propoxylat-triacrylat | 3,02 | 3,02 |
| (Dynasylan^{®} MEMO)** | 1,01 | 1,01 |
| Eisen(II)-phthalocyanin | 1,01 | 1,01 |
| Aerosil^{®} R 202*** | 10,99 | 10,99 |
| Summe | 100,00 | 246,52 |

| | | |
|---|---|---|
| * Unter Feststoff werden hier alle Stoffe verstanden, die nicht Lösemittel sind. Lösemittel ist hier Aceton. ** 3-Trimethoxysilylpropylmethacrylat, Fa. Evonik *** hydrophobierte pyrogene Kieselsäure, Fa. Evonik | | |

### Vergleichsbeispiel 2, Lösung und reaktiver Klebstofffilm A

| Rohstoff | Gew.% Feststoff* | Einwaage (g) mit Lösemittel |
|---|---|---|
| Desmomelt^{®} 530 | 35,35 | |
| Desmomelt^{®} 530-Lösung in Aceton | | 176,75 |
| (20 Gew.% Desmomelt^{®} 530 in Aceton) | | |
| 2-Phenoxyethylmethacrylat | 33,33 | 33,33 |
| N-Vinylcaprolactam | 10,10 | 10,10 |
| Trimethylolpropantrimethacrylat | 3,03 | 3,03 |
| (Dynasylan^{®} MEMO)** | 1,01 | 1,01 |
| Cumolhydroperoxid | 9,09 | |
| Peroxan^{®} CU-90L*** | | 10,10 |
| Aerosil^{®} R 202**** | 8,09 | 8,09 |
| Summe | 100,00 | 242,41 |

| | | |
|---|---|---|
| * Unter Feststoff werden hier alle Stoffe verstanden, die nicht Lösemittel sind. Lösemittel sind hier Aceton und Cumol. ** 3-Trimethoxysilylpropylmethacrylat, Fa. Evonik *** 90 gew.%ige Lösung von Cumolhydroperoxid in Cumol, Fa. Pergan **** hydrophobierte pyrogene Kieselsäure, Fa. Evonik | | |

### Vergleichsbeispiel 2, Lösung und reaktiver Klebstofffilm B

| Rohstoff | Gew.% Feststoff* | Einwaage (g) mit Lösemittel |
|---|---|---|
| Desmomelt^{®} 530 | 38,50 | |
| Desmomelt^{®} 530-Lösung in Aceton (20 Gew.% Desmomelt^{®} 530 in Aceton) | | 192,50 |
| 2-Phenoxyethylmethacrylat | 36,30 | 36,30 |
| N-Vinylcaprolactam | 11,00 | 11,00 |
| Trimethylolpropantrimethacrylat | 3,30 | 3,30 |
| (Dynasylan^{®} MEMO)** | 1,10 | 1,10 |
| Eisen(II)-phthalocyanin | 1,00 | 1,00 |
| Aerosil^{®} R 202*** | 8,80 | 8,80 |
| Summe | 100,0 | 254,00 |

| | | |
|---|---|---|
| * Unter Feststoff werden hier alle Stoffe verstanden, die nicht Lösemittel sind. Lösemittel ist hier Aceton. ** 3-Trimethoxysilylpropylmethacrylat, Fa. Evonik *** hydrophobierte pyrogene Kieselsäure, Fa. Evonik | | |

### Vergleichsbeispiel 3, Lösung und reaktiver Klebstofffilm A

| Rohstoff | Gew.% Feststoff* | Einwaage (g) mit Lösemittel |
|---|---|---|
| Desmomelt^{®} 530 | 35,35 | |
| Desmomelt^{®} 530-Lösung in Aceton (20 Gew.% Desmomelt^{®} 530 in Aceton) | | 176,75 |
| Cyclohexylmethacrylat | 33,33 | 33,33 |
| N-Vinylcaprolactam | 10,10 | 10,10 |
| Trimethylolpropantrimethacrylat | 3,03 | 3,03 |
| (Dynasylan^{®} MEMO)** | 1,01 | 1,01 |
| Cumolhydroperoxid | 9,09 | |
| Peroxan^{®} CU-90L*** | | 10,10 |
| Aerosil^{®} R 202**** | 8,09 | 8,09 |
| Summe | 100,00 | 242,41 |

| | | |
|---|---|---|
| * Unter Feststoff werden hier alle Stoffe verstanden, die nicht Lösemittel sind. Lösemittel sind hier Aceton und Cumol. ** 3-Trimethoxysilylpropylmethacrylat, Fa. Evonik *** 90 gew.%ige Lösung von Cumolhydroperoxid in Cumol, Fa. Pergan **** hydrophobierte pyrogene Kieselsäure, Fa. Evonik | | |

### Vergleichsbeispiel 3, Lösung und reaktiver Klebstofffilm B

| Rohstoff | Gew.% Feststoff* | Einwaage (g) mit Lösemittel |
|---|---|---|
| Desmomelt^{®} 530 | 38,50 | |
| Desmomelt^{®} 530-Lösung in Aceton (20 Gew.% Desmomelt^{®} 530 in Aceton) | | 192,50 |
| Cyclohexylmethacrylat | 36,30 | 36,30 |
| N-Vinylcaprolactam | 11,00 | 11,00 |
| Trimethylolpropantrimethacrylat | 3,30 | 3,30 |
| (Dynasylan^{®} MEMO)** | 1,10 | 1,10 |
| Eisen(II)-phthalocyanin | 1,00 | 1,00 |
| Aerosil^{®} R 202*** | 8,80 | 8,80 |
| Summe | 100,0 | 254,00 |

| | | |
|---|---|---|
| * Unter Feststoff werden hier alle Stoffe verstanden, die nicht Lösemittel sind. Lösemittel ist hier Aceton. ** 3-Trimethoxysilylpropylmethacrylat, Fa. Evonik *** hydrophobierte pyrogene Kieselsäure, Fa. Evonik | | |

### Push-Out-Test

Der Push-out-Test ermöglicht Aussagen über die Verklebungsfestigkeit eines doppelseitig klebenden Klebeprodukts in Richtung der Klebschichtnormalen.

### Probenvorbereitung für den Push-Out-Test

Aus den zu untersuchenden reaktiven Klebstofffilmen A und B, die beidseitig jeweils mit einem Trennliner abgedeckt sind, werden runde Stanzlinge mit einem Durchmesser von 21 mm ausgestanzt. Die Trennliner werden daraufhin jeweils von einer Seite eines Stanzlings abgezogen. Die Stanzlinge A oder B werden passgenau jeweils auf eine runde Probenscheibe aus Polycarbonat ("Disc", erstes Substrat, erster Prüfkörper) mit ebenfalls einem Durchmesser von 21 mm aufgelegt. Die Stanzlinge haften nun jeweils an der "Disc". Anschließend wird das noch auf den Stanzlingen verbliebene Trennpapier abgezogen. Die Discs sind somit nun mit den reaktiven Klebstofffilmen A oder B ausgerüstet.

Die Aushärtereaktion wird gestartet, indem die auf den "Discs" haftenden Stanzlinge A oder B mit den Gegenstanzlingen oder Gegenkomponenten in Kontakt gebracht werden.

Befindet sich Stanzling A auf der "Disc", wird somit auf Stanzling A passgenau Stanzling B gelegt. Alternativ wird Komponente B auf Stanzling A mit einem Pinselstrich dünn aufgetragen.

Befindet sich Stanzling B auf der "Disc", wird somit auf Stanzling B passgenau Stanzling A gelegt. Alternativ wird Komponente A auf Stanzling B mit einem Pinselstrich dünn aufgetragen.

Nach dem somit erfolgten Start der Aushärtereaktion muss die anschließende Verklebung mit dem zweiten Substrat innerhalb von maximal 15 Minuten erfolgen, da die Härtungsreaktion nun voranschreitet.

Zur weiteren Vorbereitung der Verklebungen werden gegebenenfalls jeweils die letzten noch auf den Stanzlingen verbliebenen Trennliner abgezogen, so dass die Stanzlinge jeweils offen liegen.

### Verklebung für den Push-Out-Test

Das zweite Substrat (zweiter Prüfkörper) ist eine quadratische Lochplatte, die aus Polycarbonat, Polyamid 6 oder eloxiertem Aluminium besteht. Die Seitenlängen betragen jeweils 40 mm. Das Loch ist jeweils zentral angeordnet und rund, der Lochdurchmesser beträgt 9 mm.

Die verwendeten Prüfkörper sind erhältlich zum Beispiel von der Firma Rocholl, 74858 Aglasterhausen, Deutschland. Die Bezeichnungen der Prüfkörper waren:
Polycarbonat: Makroform 099,
Polyamid 6: Prüfköper natur, Fabrikat Sustaplast,
Eloxiertes Aluminium: Legierung 5005A (AIMG1), eloxiert E6 EV1.

Die mit den sich in der Aushärtereaktion befindlichen Stanzlingen ausgerüsteten runden Probenkörper ("Discs") werden mit der jeweils offen liegenden Seite der Stanzlinge derart auf der Lochplatte positioniert, dass das Zentrum des runden Probenkörpers und das Zentrum des Lochs der Lochplatte übereinander liegen. Anschließend wird der durch die Haftklebrigkeit der Stanzlinge zusammengehaltene Verbund aus quadratischer Lochplatte, Stanzling A/ Stanzling B oder Stanzling B/ Stanzling A oder Stanzling A/ Komponente B oder Stanzling B/ Komponente A und der "Disc" in eine pneumatische Pressvorrichtung gelegt. Es wird ein Pressdruck von 3 bar ausgeübt. Der Verbund wird diesem Druck jeweils 60 Sekunden (Verpresszeit) jeweils bei 23°C ausgesetzt. Sodann wird der Druck aufgehoben. Der Verbund wird anschließend drei Tage bei 23°C und 50% relativer Luftfeuchtigkeit gelagert. Dabei kommt es zu einer allmählich voranschreitenden Härtungsreaktion innerhalb der Stanzlinge und zu einer sich allmählich verstärkenden Haftung zwischen den Stanzlingen sowie zu den Substraten (Prüfkörpern). Es kommt somit zu einer Verklebung mit einer allmählichen Festigkeitszunahme über die Zeit.

Die somit fertig verklebten Verbunde wurden anschließend unterschiedlich weiter gelagert:
Lagerung 1: 72 Stunden (= 3 Tage) bei 23 °C und 50 % relativer Luftfeuchtigkeit
Lagerung 2: 72 Stunden (= 3 Tage) bei 65 °C und 90 % relativer Luftfeuchtigkeit (Feuchtwärmelagerung)

Nach einer Rekonditionierung von 24 Stunden bei 23 °C und 50 % relativer Luftfeuchtigkeit erfolgten die Push-Out-Tests.

### Durchführung des Push-Out-Tests

Es wurde mittels eines in eine Zugprüfmaschine gespannten Dorns durch das Loch in der Lochplatte mit einer konstanten Geschwindigkeit von 10 mm/min senkrecht auf den runden Prüfkörper ("Disc") gedrückt (also parallel zum Normalenvektor auf die Prüfkörper-Ebene; mittig auf die Lochmitte zentriert), bis die Verklebung sich soweit löste, dass ein Druckabfall von 50 % registriert wurde. Der unmittelbar vor dem Druckabfall einwirkende Druck ist der Maximaldruck Pₘₐₓ. Dieser Wert entspricht dem in der Tabelle angegeben Push Out-Wert [N/mm²]. Alle Messungen wurden in einem klimatisierten Raum bei 23 °C und 50 % relativer Luftfeuchte durchgeführt.

### Ergebnisse

### Push-Out-Test

| | | | Beispiel 1 | Beispiel 2 | Beispiel 3 | Beispiel 4 | Beispiel 5 | Beispiel 6 | Vergleichsbeispiel 1 | Vergleichsbeispiel 2 | Vergleichsbeispiel 3 |
|---|---|---|---|---|---|---|---|---|---|---|---|
| Lagerung 1: | PC / PC-Verklebungen | Film A in Kontakt mit PC-Disc, Film B in Kontakt mit PC-Platte | 4,2 (K) | 4,8 (K) | 4,8 (K) | 7,6 (K) | 4,4 (K) | 6,7 (K) | | | |
| 3 Tage bei 23°C und 50 % relativer Luftfeuchtigkeit | | | | | | | | | | | |
| | | Film B in Kontakt mit PC-Disc, Film A in Kontakt mit PC-Platte | 4,4 (K) | 4,5 (K) | 4,9 (K) | 7,1 (K) | 4,0 (K) | 6,3 (K) | | | |
| | | Film A in Kontakt mit PC-Disc und PC-Platte, Komponente B in Kontakt mit PC-Platte* | 4,1 (K) | 4,6 (K) | 4,9 (K) | 7,0 (K) | 4,4 (K) | 6,2 (K) | | | |
| | | Film B in Kontakt mit PC-Disc und PC-Platte, Komponente A in Kontakt mit PC-Platte** | 4,0 (K) | 4,1 (K) | 4,3 (K) | 6,2 (K) | 4,1 (K) | 5,9 (K) | | | |
| | PC / PA-Verklebungen | Film A in Kontakt mit PC-Disc, Film B in Kontakt mit PA-Platte | 1,6 (A) | 1,7 (A) | 2,0 (A) | 1,9 (A) | 1,5 (A) | 1,7 (A) | 1,2 (A) | 1,6 (A) | 1,4 (A) |
| | | Film B in Kontakt mit PC-Disc, Film A in Kontakt mit PA-Platte | 1,5 (A) | 1,8 (A) | 2,1 (A) | 1,6 (A) | 1,8 (A) | 1,4 (A) | 1,0 (A) | 1,5 (A) | 1,5 (A) |
| | | Film A in Kontakt mit PC-Disc und PA-Platte, Komponente B in Kontakt mit PA-Platte* | 1,4 (A) | 1,9 (A) | 1,8 (A) | 1,7 (A) | 1,5 (A) | 1,6 (A) | 1,3 (A) | 1,5 (A) | 1,3 (A) |
| | | Film B in Kontakt mit PC-Disc und PA-Platte, Komponente A in Kontakt mit PA-Platte** | 1,3 (A) | 1,2 (A) | 1,7 (A) | 1,2 (A) | 1,6 (A) | 1,5 (A) | 1,0 (A) | 1,4 (A) | 1,4 (A) |
| | PC / Al-Verklebungen | Film A in Kontakt mit PC-Disc, Film B in Kontakt mit Al-Platte | 4,5 (K) | 2,9 (M) | 5,2 (K) | 4,6 (M) | 4,0 (K) | 4,2 (M) | | | |
| | | Film B in Kontakt mit PC-Disc, Film A in Kontakt mit Al-Platte | 4,7 (K) | 3,2 (M) | 5,1 (M) | 4,9 (K) | 4,3 (K) | 4,1 (M) | | | |
| | | Film A in Kontakt mit PC-Disc und AI-Platte, Komponente B in Kontakt mit Al-Platte* | 4,4 (K) | 3,0 (M) | 4,9 (M) | 4,1 (K) | 3,9 (K) | 3,8 (K) | | | |
| | | Film B in Kontakt mit PC-Disc und AI-Platte, Komponente A in Kontakt mit Al-Platte** | 4,0 (K) | 2,5 (M) | 4,4 (M) | 3,6 (K) | 3,1 (K) | 3,2 (K) | | | |
| Lagerung 2: | PC / PC-Verklebungen | Film A in Kontakt mit PC-Disc, Film B in Kontakt mit PC-Platte | 5,4 (K) | 6,6 (K) | 5,0 (K) | 7,7 (K) | 5,0 (K) | 7,3 (K) | | | |
| 3 Tage bei 65 °C und 90 % relativer Luftfeuchtigkeit (Feuchtwärmelage rung) | | | | | | | | | | | |
| | | Film B in Kontakt mit PC-Disc, Film A in Kontakt mit PC-Platte | 5,4 (K) | 6,9 (K) | 5,4 (K) | 7,9 (K) | 5,9 (K) | 6,8 (K) | | | |
| | | Film A in Kontakt mit PC-Disc und PC-Platte, Komponente B in Kontakt mit PC-Platte* | 5,0 (K) | 6,1 (K) | 5,5 (K) | 7,4 (K) | 5,3 (K) | 7,0 (K) | | | |
| | | Film B in Kontakt mit PC-Disc und PC-Platte, Komponente A in Kontakt mit PC-Platte** | 4,5 (K) | 5,3 (K) | 5,0 (K) | 7,4 (K) | 5,1 (K) | 6,7 (K) | | | |
| | PC / PA-Verklebungen | Film A in Kontakt mit PC-Disc, Film B in Kontakt mit PA-Platte | 4,2 (K) | 6,2 (K) | 4,5 (K) | 6,3 (K) | 4,0 (K) | 5,9 (K) | 0,9 (A) | 1,8 (A) | 0,8 (A) |
| | | Film B in Kontakt mit PC-Disc, Film A in Kontakt mit PA-Platte | 4,4 (K) | 6,0 (K) | 4,3 (K) | 6,7 (K) | 4,2 (K) | 5,6 (K) | 0,8 (A) | 1,6 (A) | 0,9 (A) |
| | | Film A in Kontakt mit PC-Disc und PA-Platte, Komponente B in Kontakt mit PA-Platte* | 4,5 (K) | 5,8 (K) | 4,2 (K) | 6,5 (K) | 4,3 (K) | 5,6 (K) | 0,7 (A) | 1,5 (A) | 0,9 (A) |
| | | Film B in Kontakt mit PC-Disc und PA-Platte, Komponente A in Kontakt mit PA-Platte** | 4,3 (K) | 5,5 (K) | 4,0 (K) | 6,2 (K) | 4,1 (K) | 5,1 (K) | 0,5 (A) | 1,1 (A) | 0,8 (A) |
| | PC / Al-Verklebungen | Film A in Kontakt mit PC-Disc, Film B in Kontakt mit Al-Platte | 2,3 (M) | 4,2 (K) | 3,3 (K) | 4,9 (K) | 2,6 (M) | 3,9 (K) | | | |
| | | Film B in Kontakt mit PC-Disc, Film A in Kontakt mit Al-Platte | 2,5 (M) | 4,1 (K) | 3,0 (K) | 4,4 (K) | 2,7 (M) | 3,6 (K) | | | |
| | | Film A in Kontakt mit PC-Disc und Al-Platte, Komponente B in Kontakt mit Al-Platte* | 2,4 (M) | 4,0 (K) | 3,2 (K) | 4,6 (K) | 2,5 (M) | 3,0 (K) | | | |
| | | Film B in Kontakt mit PC-Disc und Al-Platte, Komponente A in Kontakt mit Al-Platte** | 2,1 (M) | 3,9 (K) | 3,0 (K) | 4,1 (K) | 2,6 (M) | 3,2 (K) | | | |

| | | | | | | | | | | | |
|---|---|---|---|---|---|---|---|---|---|---|---|
| * Es wird angenommen, dass Komponente B in den Klebstofffilm A zum Teil hineinmigriert, so dass Klebstofffilm A auch mit der Platte in Kontakt ist. ** Es wird angenommen, dass Komponente A in den Klebstofffilm B zum Teil hineinmigriert, so dass Klebstofffilm B auch mit der Platte in Kontakt ist. | | | | | | | | | | | |

### Abkürzungen:

PC = Polycarbonat
PA = Polyamid 6
Al = Eloxiertes Aluminium

### Bruchbilder:

A: Adhäsiv (stets zu Polyamid oder Aluminium)
K: Kohäsiv
M: Mischbruch (adhäsiver Anteil stets zu Polyamid oder Aluminium)

### Diskussion der Ergebnisse

Der erfindungsgemäße reaktive Klebstofffilm bzw. das erfindungsgemäße, reaktive Klebstofffilm-System stellen im Hinblick auf die Verklebungsfestigkeit von Polyamidverklebungen nach einer Feuchtwärmebehandlung eine deutliche Verbesserung gegenüber dem Stand der Technik dar. Es kommt zu dem überraschenden Ergebnis, dass die Verklebungsfestigkeit von Polyamidverklebungen nach einer Feuchtwärmebehandlung im Vergleich zum Frischwert signifikant ansteigt. Die Ergebnisse der Vergleichsbeispiele zeigen, dass mit anderen als den erfindungsgemäß ausgewählten reaktiven Monomeren dieser Effekt nicht erzielt wird.

## Patentansprüche

1. Reaktives Klebstofffilm-System, umfassend zwei reaktive Klebstofffilme, umfassend (a) eine polymere Filmbildner-Matrix, (b) mindestens ein reaktives Monomer und (c) ein Reagens, ausgewählt aus einem Initiator oder einem Aktivator, wobei das mindestens eine reaktive Monomer einen Epoxid-funktionalisierten Acrylsäureester oder Epoxid-funktionalisierten Methacrylsäureester oder eine Epoxid-funktionalisierte Vinylverbindung umfasst, **dadurch gekennzeichnet, dass** der
erste reaktive Klebstofffilm einen Radikalinitiator umfasst und der zweite reaktive Klebstofffilm einen Aktivator umfasst.

2. Reaktives Klebstofffilm-System nach Anspruch 1, **dadurch gekennzeichnet, dass** das mindestens eine reaktive Monomer einen mit einer oder mit mehreren cycloaliphatischen Epoxid-Gruppen funktionalisierten Acrylsäureester oder Methacrylsäureester oder eine mit einer oder mehreren cycloaliphatischen Epoxid-Gruppen funktionalisierte Vinylverbindung umfasst.

3. Reaktives Klebstofffilm-System nach einem der Ansprüche 1 oder 2, **dadurch gekennzeichnet, dass** das
mindestens eine reaktive Monomer 3,4-Epoxycyclohexylmethylacrylat (CAS-Nr.: 64630-63-3) oder 3,4-Epoxycyclohexylmethylmethacrylat (CAS-Nr.: 82428-30-6) oder 1,2-Epoxy-4-vinylcyclohexan (CAS-Nr.: 106-86-5) umfasst.

4. Reaktives Klebstofffilm-System nach einem der vorhergehenden Ansprüche, **dadurch gekennzeichnet, dass**
die polymere Filmbildner-Matrix ein thermoplastisches Polymer, vorzugsweise ein thermoplastisches Polyurethan umfasst.

5. Reaktives Klebstofffilm-System nach einem der vorhergehenden Ansprüche, **dadurch gekennzeichnet, dass**
der Radikalinitiator ein Peroxid, vorzugsweise ein Hydroperoxid, besonders bevorzugt Diisopropylbenzol-hydroperoxid umfasst.

6. Reaktives Klebstofffilm-System nach einem der vorhergehenden Ansprüche, **dadurch gekennzeichnet, dass**
der Aktivator ein Dihydropyridin-Derivat oder ein Übergangsmetallkomplex, vorzugsweise ein Übergangsmetall-Phthalocyanin-Komplex, besonders bevorzugt Eisen(II)-phthalocyanin, umfasst.

7. Reaktives Klebstofffilm-System nach einem der vorhergehenden Ansprüche, **dadurch gekennzeichnet, dass**
die Filme haftklebrige Eigenschaften besitzen.

8. Reaktives Klebstofffilm-System nach einem der vorhergehenden Ansprüche, **dadurch gekennzeichnet, dass**
der erste reaktive Klebstofffilm 10 bis 90 Gew. % polymere Filmbildner-Matrix, 10 bis 90 Gew. % mindestens eines reaktiven Monomers und 1 bis 10 Gew. % Radikalinitiator, vorzugsweise 20 bis 50 Gew. % polymere Filmbildner-Matrix, 40 bis 70 Gew. % mindestens eines reaktiven Monomers und 2 bis 8 Gew. % Radikalinitiator umfasst.

9. Reaktives Klebstofffilm-System nach einem der vorhergehenden Ansprüche, **dadurch gekennzeichnet, dass**
der zweite reaktive Klebstofffilm 10 bis 90 Gew. % polymere Filmbildner-Matrix, 10 bis 90 Gew. % mindestens eines reaktiven Monomers und größer 0 bis 10 Gew. % Aktivator, vorzugsweise 20 bis 50 Gew. % polymere Filmbildner-Matrix, 40 bis 70 Gew. % mindestens eines reaktiven Monomers und 0,1 bis 5 Gew. % Aktivator umfasst.

10. Verwendung eines reaktiven Klebstofffilm-Systems nach einem der Ansprüche 1 bis 9 zur Verklebung von Materialien aus Kunststoff, insbesondere Polyamid und Polycarbonat sowie Metall, insbesondere Aluminium.

11. Kit zur Bereitstellung eines Zweikomponenten-Klebstofffilm-Systems, umfassend
(i) mindestens einen ersten reaktiven Klebstofffilm umfassend (a) eine polymere Filmbildner-Matrix, (b) mindestens ein reaktives Monomer und (c) ein Reagens, ausgewählt aus einem Initiator oder einem Aktivator, wobei das mindestens eine reaktive Monomer einen Epoxid-funktionalisierten Acrylsäureester oder Epoxid-funktionalisierten Methacrylsäureester oder eine Epoxid-funktionalisierte Vinylverbindung umfasst, und wobei der Klebstoffilm einen Radikalinitiator umfasst, und
(ii) mindestens einen zweiten reaktiven Klebstofffilm umfassend (a) eine polymere Filmbildner-Matrix, (b) mindestens ein reaktives Monomer und (c) ein Reagens, ausgewählt aus einem Initiator oder einem Aktivator, wobei das mindestens eine reaktive Monomer einen Epoxid-funktionalisierten Acrylsäureester oder Epoxid-funktionalisierten Methacrylsäureester oder eine Epoxid-funktionalisierte Vinylverbindung umfasst, und wobei der Klebstofffilm einen Aktivator umfasst.

12. Verbundkörper, der durch das reaktive Klebstofffilm-System nach einem der Ansprüche 1 bis 9 oder durch das Kit nach Anspruch 11 verbunden ist.

## Claims

1. A reactive adhesive film system, comprising two reactive adhesive films, comprising (a) a polymeric film-former matrix, (b) at least one reactive monomer and (c) a reagent, selected from an initiator or an activator, wherein the at least one reactive monomer comprises an epoxy-functionalized acrylic acid ester or epoxy-functionalized methacrylic acid ester or an epoxy-functionalized vinyl compound, **characterized in that**
the first reactive adhesive film comprises a radical initiator and the second reactive adhesive film comprises an activator.

2. The reactive adhesive film system as claimed in claim 1, **characterized in that** the at least one reactive monomer comprises an acrylic acid ester or methacrylic acid ester functionalized with one or more cycloaliphatic epoxy groups or a vinyl compound functionalized with one or more cycloaliphatic epoxy groups.

3. The reactive adhesive film system as claimed in one of claims 1 or 2, **characterized in that** the at least one reactive monomer comprises 3,4-epoxycyclohexylmethyl acrylate (CAS No.: 64630-63-3) or 3,4-epoxycyclohexylmethyl methacrylate (CAS No.: 82428-30-6) or 1,2-epoxy-4-vinylcyclohexane (CAS No.: 106-86-5).

4. The reactive adhesive film system as claimed in one of the preceding claims, **characterized in that** the polymeric film-former matrix comprises a thermoplastic polymer, preferably a thermoplastic polyurethane.

5. The reactive adhesive film system as claimed in one of the preceding claims, **characterized in that** the radical initiator comprises a peroxide, preferably a hydroperoxide, particularly preferably diisopropylbenzene hydroperoxide.

6. The reactive adhesive film system as claimed in one of the preceding claims, **characterized in that** the activator comprises a dihydropyridine derivative or a transition metal complex, preferably a transition metal phthalocyanine complex, particularly preferably iron(II) phthalocyanine.

7. The reactive adhesive film system as claimed in one of the preceding claims, **characterized in that** the films have adhesive properties.

8. The reactive adhesive film system as claimed in one of the preceding claims, **characterized in that** the first reactive adhesive film comprises 10 to 90% by weight of polymeric film-former matrix, 10 to 90% by weight of at least one reactive monomer and 1 to 10% by weight of radical initiator, preferably 20 to 50% by weight of polymeric film-former matrix, 40 to 70% by weight of at least one reactive monomer and 2 to 8% by weight of radical initiator.

9. The reactive adhesive film system as claimed in one of the preceding claims, **characterized in that** the second reactive adhesive film comprises 10 to 90% by weight of polymeric film-former matrix, 10 to 90% by weight of at least one reactive monomer and greater than 0 to 10% by weight of activator, preferably 20 to 50% by weight of polymeric film-former matrix, 40 to 70% by weight of at least one reactive monomer and 0.1 to 5% by weight of activator.

10. Use of a reactive adhesive film system as claimed in one of claims 1 to 9 for bonding materials produced from plastic, in particular polyamide and polycarbonate, as well as metal, in particular aluminium.

11. A kit for providing a two-component adhesive film system, comprising
(i) at least one first reactive adhesive film comprising (a) a polymeric film-former matrix, (b) at least one reactive monomer and (c) a reagent, selected from an initiator or an activator, wherein the at least one reactive monomer comprises an epoxy-functionalized acrylic acid ester or epoxy-functionalized methacrylic acid ester or an epoxy-functionalized vinyl compound, and wherein the adhesive film comprises a radical initiator, and
(ii) at least one second reactive adhesive film comprising (a) a polymeric film-former matrix, (b) at least one reactive monomer and (c) a reagent, selected from an initiator or an activator, wherein the at least one reactive monomer comprises an epoxy-functionalized acrylic acid ester or epoxy-functionalized methacrylic acid ester or an epoxy-functionalized vinyl compound, and wherein the adhesive film comprises an activator.

12. A composite body which is bonded by the reactive adhesive film system as claimed in one of claims 1 to 9 or by the kit as claimed in claim 11.

## Revendications

1. Système réactif de film d'adhésif, comprenant deux films d'adhésif réactifs, comprenant (a) une matrice filmogène polymère, (b) au moins un monomère réactif et (c) un agent choisi parmi un initiateur ou un activateur, l'au moins un monomère réactif comprenant un ester d'acide acrylique fonctionnalisé à l'époxyde ou un ester d'acide méthyacrylique fonctionnalisé à l'époxyde ou un composé vinylique fonctionnalisé à l'époxyde, **caractérisé en ce que**
le premier film d'adhésif réactif comprend un initiateur radicalaire et le second film d'adhésif réactif comprend un activateur.

2. Système réactif de film d'adhésif selon la revendication 1, **caractérisé en ce que** l'au moins un monomère réactif comprend un ester d'acide acrylique ou ester d'acide méthacrylique fonctionnalisé avec un ou plusieurs groupes d'époxyde cycloaliphatiques ou un composé vinylique fonctionnalisé avec un ou plusieurs groupes d'époxyde cycloaliphatiques.

3. Système réactif de film d'adhésif selon l'une des revendications 1 ou 2, **caractérisé en ce que** l'au moins un monomère réactif comprend le méthacrylate de 3,4-époxycyclohexyle (n° CAS : 64630-63-3) ou le méthylméthacrylate de 3,4-époxycyclohexylméthyle (n° CAS : 82428-30-6) ou le 1,2-époxy-4-vinylcyclohexane (n° CAS 106-86-5).

4. Système réactif de film d'adhésif selon l'une des revendications précédentes, **caractérisé en ce que** la matrice filmogène polymère comprend un polymère thermoplastique, s'agissant préférentiellement d'un polyuréthane thermoplastique.

5. Système réactif de film d'adhésif selon l'une des revendications précédentes, **caractérisé en ce que** ledit initiateur radicalaire comprend un peroxyde, de préférence un hydroperoxyde, s'agissant avec une préférence particulière de l'hydroperoxyde de diisopropylbenzène.

6. Système réactif de film d'adhésif selon l'une des revendications précédentes, **caractérisé en ce que** ledit activateur comprend un dérivé de dihydropyridine ou un complexe de métal de transition, de préférence un complexe de type métal de transition / phtalocyanine, s'agissant avec une préférence particulière de fer(II) / phtalocyanine.

7. Système réactif de film d'adhésif selon l'une des revendications précédentes, **caractérisé en ce que** lesdits films ont des propriétés d'adhérence sensible à la pression.

8. Système réactif de film d'adhésif selon l'une des revendications précédentes, **caractérisé en ce que** le premier film d'adhésif réactif comprend 10 à 90 % en poids d'une matrice filmogène polymère, 10 à 90 % en poids d'au moins un monomère réactif et 1 à 10 % en poids d'un initiateur radicalaire, de préférence 20 à 50 % poids d'une matrice filmogène polymère, 40 à 70 % en poids d'au moins un monomère réactif et 2 à 8 % en poids d'un initiateur radicalaire.

9. Système réactif de film d'adhésif selon l'une des revendications précédentes, **caractérisé en ce que** le second film d'adhésif réactif comprend 10 à 90 % en poids d'une matrice filmogène polymère, 10 à 90 % en poids d'au moins un monomère réactif et entre plus de 0 et 10 % en poids d'un activateur, de préférence 20 à 50 % en poids d'une matrice filmogène polymère, 40 à 70 % en poids d'au moins monomère réactif et 0,1 à 5 % en poids d'un activateur.

10. Utilisation d'un système réactif de film d'adhésif selon l'une des revendications 1 à 9, pour coller des matériaux en matière plastique, notamment polyamide et polycarbonate, ainsi qu'en métal, notamment aluminium.

11. Kit permettant de fournir un système de film d'adhésif à deux constituants, comprenant
(i) au moins un premier film d'adhésif réactif comprenant (a) une matrice filmogène polymère, (b) au moins un monomère réactif et (c) un agent choisi parmi un initiateur ou un activateur, l'au moins un monomère réactif comprenant un ester d'acide acrylique fonctionnalisé à l'époxyde ou un ester d'acide méthyacrylique fonctionnalisé à l'époxyde ou un composé vinylique fonctionnalisé à l'époxyde, et ledit film d'adhésif comprenant un initiateur radicalaire, et
(ii) au moins un second film d'adhésif réactif comprenant (a) une matrice filmogène polymère, (b) au moins un monomère réactif et (c) un agent choisi parmi un initiateur ou un activateur, l'au moins un monomère réactif comprenant un ester d'acide acrylique fonctionnalisé à l'époxyde ou un ester d'acide méthyacrylique fonctionnalisé à l'époxyde ou un composé vinylique fonctionnalisé à l'époxyde, et ledit film d'adhésif comprenant un activateur.

12. Corps composite qui est relié par le système réactif de film d'adhésif selon l'une des revendications 1 à 9 ou par le kit selon la revendication 11.
